# EUROPÄISCHE PATENTSCHRIFT

(11) **EP 3 539 086 B1**
(45) Veröffentlichungstag und Bekanntmachung des Hinweises auf die Patenterteilung: **18.03.2026**
(21) Anmeldenummer: 17797130.6
(22) Anmeldetag: 07.11.2017
(51) Int. Cl.: G06T 19/00

(54) **VERFAHREN UND VORRICHTUNG ZUM ÜBERLAGERN EINES ABBILDS EINER REALEN SZENERIE MIT VIRTUELLEN BILD- UND AUDIODATEN UND EIN MOBILES GERÄT**
METHOD AND APPARATUS FOR SUPERIMPOSING VIRTUAL IMAGE AND AUDIO DATA ON A PORTRAYAL OF REAL SCENERY, AND A MOBILE DEVICE
PROCÉDÉ ET DISPOSITIF POUR SUPERPOSER DES DONNÉES IMAGE ET AUDIO VIRTUELLES À UNE REPRÉSENTATION OPTIQUE ET SONORE D'UNE SCÈNE RÉELLE ET APPAREIL MOBILE

(30) Priorität: 08.11.2016 DE 102016121281
(43) Veröffentlichungstag der Anmeldung: 18.09.2019
(73) Patentinhaber: 3DQR Patent Holding GmbH, 39104 Magdeburg (DE)
(72) Erfinder: ANDERSON, Daniel, 39106 Magdeburg (DE); BAUER, Volker, 39307 Genthin (DE)
(74) Vertreter: Aurigium Leischner & Luthe
(86) Internationale Anmeldenummer: PCT/EP2017/078464
(87) Internationale Veröffentlichungsnummer: WO 2018/087084

(56) Entgegenhaltungen:
- US-A1- 2012 032 977
- US-A1- 2012 147 039
- ULRICH NEUMANN ET AL: "Natural Feature Tracking for Augmented Reality", IEEE TRANSACTIONS ON MULTIMEDIA, IEEE, USA, vol. 1, no. 1, 1 March 1999 (1999-03-01), XP011036279, ISSN: 1520-9210
- SATO T ET AL: "CAMERA PARAMETER ESTIMATION FROM A LONG IMAGE SEQUENCE BY TRACKING MARKERS AND NATURAL FEATURES", SYSTEMS & COMPUTERS IN JAPAN, WILEY, HOBOKEN, NJ, US, vol. 35, no. 8, 1 July 2004 (2004-07-01), pages 12 - 20, XP001196294, ISSN: 0882-1666, DOI: 10.1002/SCJ.10702
- ZHOU Z ET AL: "An experimental study on the role of 3D sound in augmented reality environment", INTERACTING WITH COMPUT, BUTTERWORTH-HEINEMANN, GB, vol. 16, no. 6, 1 December 2004 (2004-12-01), pages 1043 - 1068, XP004654624, ISSN: 0953-5438, DOI: 10.1016/J.INTCOM.2004.06.016
- JAKA SODNIK ET AL: "Spatial sound localization in an augmented reality environment", COMPUTER-HUMAN INTERACTION, ACM, 2 PENN PLAZA, SUITE 701 NEW YORK NY 10121-0701 USA, 20 November 2006 (2006-11-20), pages 111 - 118, XP058245079, ISBN: 978-1-59593-545-8, DOI: 10.1145/1228175.1228197
- RUMINSKI DARIUSZ: "Modeling spatial sound in contextual augmented reality environments", 2015 6TH INTERNATIONAL CONFERENCE ON INFORMATION, INTELLIGENCE, SYSTEMS AND APPLICATIONS (IISA), IEEE, 6 July 2015 (2015-07-06), pages 1 - 6, XP032852099, DOI: 10.1109/IISA.2015.7387982

## Beschreibung

Die Erfindung betrifft ein Verfahren und eine Vorrichtung zum Überlagern eines Abbilds einer realen Szenerie mit virtuellen Bild- und Audiodaten, wobei das Verfahren beispielsweise unter Verwendung eines mobilen Geräts ausgeführt werden kann, sowie ein mobiles Gerät wie beispielsweise ein Smartphone.

Das grundlegende Konzept der Augmented Reality (AR) existiert bereits seit einigen Jahrzehnten und bezeichnet die Überlagerung von Echtzeit-Abbildern der Realität (z.B. als Kamerabild) mit virtuellen Informationen.

ZHOU Z ET AL: "An experimental study on the role of 3D sound in aug-mented reality environment"; INTERACTING WITH COMPUT, BUTIERWORTH-HEINEMANN; GB, Bd. 16, Nr. 6, 1. Dezember 2004 (2004-12-01), Seiten 1043-1068; XP004654624, ISSN: 0953-5438, DOI: 10.1016/J.INTCOM.2004.06.016 befasst sich mit der Wirkung von Geräuschen hinsichtlich der Tiefenwahrnehmung in einer erweiterten Realität (AR). Dabei werden mehrere Marker verwendet, die in unterschiedlichen Entfernungen zu einer Kamera angeordnet sind.

JAKA SODNIK ET AL: "Spatial sound localization in an augmented reality environment", COMPUTER-HUMAN INTERACTION, ACM, 2 PENN PLAZA, SUITE 701 NEW YORK NY 10121 -0701 USA, 20. November 2006 (2006-11-20); Pages 111-118; XP058245079; DOI: 10.1145/1228175.1228197; ISBN: 978-1-59593-545-8) befasst sich mit der Kombinierung von Geräuschen mit virtuellen Objekten in einer virtuellen Umgebung.

RUMINSKI DARIUSZ: "Modellng spatial sound In contextual augmented rea-lity environments", 2015 6TH INTERNATIONAL CONFERENCE ON INFORMATION, IN-TELLIGENCE, SYSTEMS AND APPLICATIONS (IISA), IEEE, 6. Juli 2015 (2015-07-06); Pages 1 -6; XP032852099, DOI: 10.1109/IISA.2015.7387982 [found on 2016-01-20]) befasst sich mit der Kombination von optischen und akustischen Inhalten in einer virtuellen Umgebung.

ULRIC H NEUMANN ET AL: "Natural Feature Tracking for Augmented Reality", IEEE TRANSACTIONS ON MULTIME DIA, IEEE, USA, Bd. 1, Nr. 1, 1. März 1999 (1999-03-01), XP011 036279, ISSN: 1520-9210 offenbart eine Anwendung des natürlichen Feature-Trackings als automatische Erweiterung des Arbeitsbereichs eines AR-Systems, indem natürlich vorkommende Merkmale als zusätzliche Referenzpunkte verwendet werden.

SATO T ET AL: "CAMERA PARAMETER ESTIMATION FROM A LONG IMAGE SEQUENCE BY TRACKING MARKERS ANO NATURAL FEATURES", SYSTEMS & COMPUTERS IN JAPAN, WILEY, HOBOKEN, NJ, US, Bd. 35, Nr. 8, 1. Juli 2004 (2004-07-01), Seiten 12-20, XP001196294, ISSN: 0882-1666, DOI: 10.1002/SCJ.10702 offenbart ein Verfahren, bei dem vordefinierte Marker nicht in einer Eingabesequenz sichtbar sein müssen, da 3D-Positionen von natürlichen Merkmalen erkannt werden und anstelle von Markierungen verwendet werden.

Der Erfindung stellt sich die Aufgabe, ein gegenüber dem Stand der Technik verbessertes Verfahren und eine verbesserte Vorrichtung zum Überlagern eines Abbilds einer realen Szenerie mit virtuellen Bild- und Audiodaten sowie ein verbessertes mobiles Gerät zu schaffen.

Diese Aufgabe wird durch ein Verfahren und eine Vorrichtung zum Überlagern eines Abbilds einer realen Szenerie mit virtuellen Bild- und Audiodaten sowie ein mobiles Gerät gemäß den Hauptansprüchen gelöst. Vorteilhafte Ausgestaltungen und Weiterbildungen der Erfindung ergeben sich aus den nachfolgenden Unteransprüchen.

Der beschriebene Ansatz befasst sich speziell mit dem Bereich der optisch und akustisch kongruent überlagernden Augmented Reality, bei der virtuelle Objekte und Audiodaten in Position und Lage mit ausgewählten Ankerpunkten in der realen Szene verknüpft werden und stets perspektivisch korrekt so in die dreidimensionale Szene eingeblendet werden, als wären sie Teil der realen Umgebung. Dazu kann gemäß einer Ausführungsform jedes einzelne Bild eines Kamera-Streams mit Bild- und oder Tonverarbeitungsverfahren analysiert und die entsprechend nötige dreidimensionale Position und Lage des virtuellen Objekts berechnet werden, um diesen Effekt zu erreichen. Vorteilhafterweise ermöglicht der beschriebene Ansatz eine stetige Verfolgung der Szenerie während der Bewegung des Betrachters.

Eine Auswahl eines die reale Szenerie überlagernden virtuellen Objekts, im Folgenden auch als virtuelles Bild- und Audioobjekt oder virtuelle Bild- und Audiodaten bezeichnet, kann vorteilhaft unter Verwendung eines in der realen Szenerie vorhandenen Markers, beispielsweise eines QR-Codes, durchgeführt werden. Das Objekt kann dabei als dreidimensionale Datenablage in einer Datenbank hinterlegt sein. Zusätzlich oder alternativ kann das Objekt aus einer Abfolge von Aufnahmen, beispielsweise Fotografien und/oder akustischen Aufnahmen, die aus verschiedenen Winkeln (360°) aufgenommen und in der Datenbank abgelegt wurden, bestehen. Bei einer dreidimensionalen Datenablage kann dabei Punkte des Objekts definierende Koordinaten eines Koordinatensystems oder ein Einzelpunkt und Vektoren zur Bestimmung aller weiteren Punkte des Objekts umfassen. Bei der Abfolge von Aufnahmen kann es sich um eine Abfolge von zweidimensionalen Aufnahmen handeln. Jede der Aufnahmen kann dabei das Objekt abbilden. Eine Positionierung des virtuellen Bilds und der Audiodaten innerhalb eines Abbilds der realen Szenerie kann vorteilhaft unter Verwendung zumindest eines Objektabschnitts, beispielsweise einer Kante oder einer Fläche eines im Umfeld des Markers in der realen Szenerie angeordneten Objekts durchgeführt werden. Ein Abbild dieses Objektabschnitts kann also als neuer und/oder zusätzlicher Ankerpunkt für das virtuelle Objekt verwendet werden. Der Marker kann weniger als 1%, beispielsweise nur 0,6% oder sogar nur 0,1% oder gar 0,01% des Abbilds der realen Szenerie einnehmen.

Durch die Verwendung des Markers kann mit geringem Aufwand sichergestellt werden, dass die zur realen Szenerie passenden virtuellen Bild- und Audiodaten ausgewählt werden. Durch die Verwendung des Objektabschnitts kann sichergestellt werden, dass die virtuellen Bild- und Audiodaten auch bei widrigen Bedingungen, beispielsweise schlechten Lichtverhältnissen, sehr genau positioniert werden können. Diese Positionierung ist auch dann möglich, wenn in späteren Abbildern der realen Szenerie der Marker nicht mehr oder nur teilweise abgebildet wird.

Ein optisches Bild eines Gegenstandes ist die vom Auge erfasste Reflexion von optisch sichtbaren Wellen mit einer typischen Wellenlänge von 400-800 nm, die zunächst auf den Gegenstand fallen und von diesem reflektiert, im Auge des Betrachters ankommen. Bei Licht-Quellen emittiert der Gegenstand selbst - an vorgegebenen Punkten - sichtbares Licht. In gleicher Weise lässt sich auch ein akustisches "Bild" eines Gegenstandes oder einer Umgebung durch die entsprechende Reflexion hörbarer Wellen, beispielsweise mit einer typischen Frequenz von 20-20.000 Hz, erzeugen, die durch den Gegenstand bzw. die Umgebung reflektiert und durch die Ohren des Betrachters als räumliches "Bild" interpretiert werden können. Entsprechend einer Lichtquelle kann auch der Gegenstand selbst an unterschiedlichen Stellen Schallquellen emittieren und damit einen räumlichen Eindruck hervorrufen (Beispiel: Orchester). In ähnlicher Weise können Blinde durch Klickgeräusche und die Reflexion aus der Umgebung ein "Raumbild" erzeugen und auch wiedergeben. In gleicher Weise arbeitet jedes Echolot; aus den eingehenden Schallwellen wird elektronisch ein Raumbild / Bild des Gegenstandes erzeugt und auf einem Bildschirm angezeigt; in gleicher Weise ist es möglich, ein entsprechendes akustisches Abbild der Umgebung im Kopf des Betrachters zu erzeugen.

Der hier beschriebene Ansatz besteht darin, die virtuellen Bild-oder Audiodaten in das auf den Bildschirm gezeigte, durch die Kamera erfasste Abbild der Umgebung zu jedem Zeitpunkt während der Betrachter sich in Bewegung befindet, in der richtigen Größenordnung und an der richtigen Position und in der richtigen Winkelanordnung im Verhältnis zu dem Marker, beispielsweise dem QR-Code, und den Bildmarkern darzustellen. Der Mensch betrachtet dann dieses "Gesamtbild" und hat dann den Eindruck eines scheinbar realen, einheitlichen, durch die Kamera erfassten Bildes. Gleichzeitig soll der virtuelle Bild- und/oder Audio-Gegenstand zu jedem Zeitpunkt und aus jeder Richtung des Betrachters/Hörers exakt an denjenigen Stellen Schall in der Stärke bzw. Klangqualität emittieren, an denen dies auch in der Realität geschieht. Selbstverständlich werden die emittierten Schallwellen in ihrer Frequenz und/oder Lautstärke korrekt in Abhängigkeit zur Distanz und zum Winkel des emittieren Objektes bzw. in der entsprechenden Verzerrung (Doppler-Effekt) durch die Bewegung des emittierenden Objektes dargestellt. Beim "Herumgehen" um das Objekt werden somit einzelne Schallquellen "verschwinden" während andere Schallquellen "auftauchen". Genau dieser Darstellungsprozess wird im Bildschirm bzw. im Kopfhörer durch den hier beschriebenen Ansatz gesteuert.

Zur Bestimmung eines Markers und dessen Positionierung innerhalb der Bilddaten, zur Bestimmung der Bild- und Audiodaten über die Markerdaten und deren Positionierung in Bezug zu dem Abbild kann auf geeignete bekannte Verfahren zurückgegriffen werden, wobei es jeweils viele Wege zur Lösung der entsprechenden Teilschritte bekannt sind.

Ein Verfahren zum Überlagern eines Abbilds einer realen Szenerie mit virtuellen dreidimensionalen oder zweidimensionalen Bild- und Audiodaten umfasst die folgenden Schritte:
Einlesen von Abbilddaten, die ein von zumindest einer Umfelderfassungseinrichtung eines mobilen Geräts erfasstes bildliches Abbild der realen Szenerie repräsentieren;
Bestimmen von Markerdaten aus den Bild- und Audiodaten, wobei die Markerdaten ein Abbild und eine Positionierung eines in der realen Szenerie angeordneten Markers repräsentieren;
Einlesen von virtuellen Bild- und Audiodaten, die mittels der Markerdaten ausgewählt wurden. Die eingelesenen Daten, die aus einer Mehrzahl virtueller dreidimensionaler und/oder zweidimensionaler Bild- und Audiodaten bestehen, enthalten auch eine Darstellungsanweisung zum Darstellen eines virtuellen Bilds, eine Positionierungsanweisung zum Positionieren des virtuellen Bilds und eine Positionierungsanweisung zur Wiedergabe von akustischen Daten und/oder einen Auslöser zum Abspielen der Audiodaten;
Bestimmen von Objektdaten aus den Abbilddaten, wobei die Objektdaten aus einem optischen und/oder einem akustischen dreidimensionalen Abbild oder einer Reihe von zweidimensionalen Fotografien und/oder Tonaufnahmen aus verschiedenen Winkeln und einer Positionierung eines Objektabschnitts eines im Umfeld des Markers in der realen Szenerie angeordneten Objekts bestehen;
Ermitteln einer Positionierungsvorschrift zum Positionieren des virtuellen Bilds und der diesem virtuellen Bild zugeordneten akustischen Daten oder der zusätzlichen virtuellen Audiodaten in Bezug zu dem Abbild des Objektabschnitts unter Verwendung der Markerdaten, der Objektdaten und der virtuellen Bild- und Audiodaten.

Bei der realen Szenerie kann es sich beispielsweise um einen Bereich eines Umfelds des mobilen Geräts handeln, der im Erfassungsbereich einer oder mehrerer der Umfelderfassungseinrichtungen liegt. Bei der Umfelderfassungseinrichtung kann es sich um eine optische Bilderfassungseinrichtung und bei einer optionalen weiteren Umfelderfassungseinrichtung kann es sich um eine akustische Tonerfassungseinrichtung, beispielsweise eine oder mehrere Kameras beziehungsweise Mikrofone handeln. Das virtuelle Abbild kann auch als virtuelles Bild bezeichnet werden. Das virtuelle Abbild kann virtuelle Bild- und Audiodaten umfassen. Die virtuellen Bild- und Audiodaten können eine Darstellungsanweisung zum bildlichen und/oder akustischen Darstellen eines dreidimensional definierten Objektes und/oder zum Darstellen einer Auswahl von aus verschiedenen Winkeln aufgenommenen bildlichen und/oder akustischen Aufnahmen, beispielsweise in Form von zweidimensionalen Fotografien oder Tonaufnahmen eines Objekts umfassen. Die Darstellungsanweisung kann zur Überlagerung des optischen und akustischen Abbilds der realen Szenerie mit den virtuellen dreidimensionalen oder zweidimensionalen Bild- und Audiodaten verwendet werden. Das Abbild, aus dem die Objektdaten im Schritt des Bestimmens bestimmt werden, kann unter Verwendung der Umfelderfassungseinrichtung (-en) erfasste Bild- und optional Audiodaten der realen Szenerie darstellen, die beispielsweise unter Verwendung der Anzeigeeinrichtungen und Ausgabeeinrichtungen des mobilen Geräts angezeigt oder ausgegeben werden können. Unter den virtuellen Bild- und Audiodaten kann eine beliebige optische und akustische Darstellung, beispielsweise eine Grafik, ein Symbol oder eine Schrift, Gespräche, Musik oder andere Geräusche verstanden werden, die in das Abbild der realen Szenerie eingefügt werden können. Die virtuellen Bild- und Audiodaten können ein dreidimensionales oder auch ein zweidimensionales Bild sowie zugehörige Audiodaten oder einen Punkt oder eine singuläre Tonquelle darstellen. Bei den virtuellen Bild- und Audiodaten kann es sich um ausgewählte Daten handeln. Eine Überlagerung des optischen und akustischen Abbilds der realen Szenerie mit den virtuellen Bild- und Audiodaten kann das optische und akustische Abbild der realen Szenerie umfassen, in dem zumindest ein Bereich vollständig oder beispielsweise halb-transparent von den virtuellen Bild- und Audiodaten verdeckt ist. Die virtuellen Audiodaten umfassen gemäß einer Ausführungsform Stereo-Audiodaten, die beispielsweise über eine geeignete Schnittstelle an einen Stereo-Lautsprecher bereitgestellt werden und von dem Stereo-Lautsprecher ausgegeben werden können. Stereo-Audiodaten haben den Vorteil, dass sie dem Hörer eine Richtung vermitteln können, in der eine den virtuellen Audiodaten zugeordnete virtuelle Tonquelle zu sein scheint. Die virtuellen Audiodaten können die akustischen Daten umfassen, die zum Überlagen verwendet werden können. Unter einem Marker kann ein künstlich in der Szenerie platzierter Marker, beispielsweise ein geometrischer Marker, in Form eines Codes oder Piktogramms verstanden werden. Der Marker kann als ein künstlicher Marker in Form eines eindimensionalen oder zweidimensionalen Codes ausgeführt sein. Beispielsweise kann der Marker als eine Matrix mit hellen und dunklen Flächen ausgeführt sein. Der Marker kann eine optoelektronisch lesbare Schrift repräsentieren. In dem Marker können Daten in Form eines Symbols abgebildet sein. Die Markerdaten können Informationen über das Abbild des Markers und die Positionierung des Abbilds des Markers innerhalb des Abbilds der realen Szenerie umfassen. In den weiteren Schritt des Verfahrens können die Markerdaten jeweils vollständig oder teilweise und gegebenenfalls auch in einer weiterverarbeiteten Form verwendet werden. Die Positionierungsanweisung zum Positionieren der virtuellen Bild- und Audiodaten kann geeignet sein, um die virtuellen Bild- und Audiodaten in Bezug zu dem Abbild des Markers in dem Abbild der realen Szenerie zu positionieren. Der Objektabschnitt kann ein Teil, Abschnitt oder ein Bereich, beispielsweise eine Kante oder Fläche oder auch ein akustisch definierter Bereich eines realen Objekts sein. Ein Objekt kann ein beliebiger Gegenstand, beispielsweise ein Gebäude, ein Einrichtungsgegenstand, ein Fahrzeug, ein Musikinstrument oder ein Stück Papier sein. Der Objektabschnitt kann beispielsweise eine Außenkante oder eine Kante zwischen zueinander abgewinkelten Flächen eines solchen Gegenstands sein. Die Objektdaten können Informationen über das optische und akustische Abbild des Objektabschnitts und einer Positionierung dieses Abbilds innerhalb des Abbilds der realen Szenerie umfassen. In den weiteren Schritt des Verfahrens können die Objektdaten jeweils vollständig oder teilweise und gegebenenfalls auch in einer weiterverarbeiteten Form verwendet werden. Die Positionierungsvorschrift kann geeignet sein, um die virtuellen Bild- und Audiodaten in Bezug zu dem optischen und akustischen Abbild des Objektabschnitts in dem entsprechenden Abbild der realen Szenerie oder einem weiteren Abbild der realen Szenerie zu positionieren. Die Positionierungsvorschrift kann unter Verwendung der Positionierung des Abbilds des Markers, der Positionierung des optischen und beziehungsweise oder des akustischen Abbilds des Objektabschnitts und der Positionierungsanweisung ermittelt werden.

Der genannte Objektabschnitt, bzw. das Abbild des Objektabschnitts kann als ein sogenannter Ankerpunkt angesehen werden. Ein solcher Ankerpunkt kann zusätzlich oder alternativ zu dem Marker zum Positionieren des virtuellen Abbilds und der akustischen Daten verwendet werden. Es ist also nicht erforderlich, dass stets der Marker, also beispielsweise der QR-Code, selbst zum Positionieren des virtuellen Objekts, also des virtuellen Abbilds und der akustischen Daten, genutzt wird. Stattdessen kann der Marker mit einem oder mehreren Ankerpunkten aus der Umgebung des Markers erweitert werden, so dass der Marker auch verfolgt werden kann, wenn er gar nicht mehr im Bild, also dem auf einer Anzeigeeinrichtung des mobilen Geräts angezeigten Abbild der realen Szenerie, ist.

Somit können im Schritt des Einlesens die eingelesenen Abbilddaten neben den Bilddaten ferner Audiodaten repräsentieren oder umfassen. Die Audiodaten werden auch als Tondaten bezeichnet. Die Audiodaten können ein von zumindest einer weiteren Umfelderfassungseinrichtung des mobilen Geräts erfasstes akustisches Abbild der realen Szenerie repräsentieren. Auf diese Weise kann beispielsweise eine zu den erfassten optischen Bilddaten zugehörige Geräuschkulisse aufgenommen und verarbeitet werden. Die weitere Umfelderfassungseinrichtung kann beispielsweise ein Mikrofon oder mehrere Mikrofone umfassen. Bei der Verwendung mehrerer Mikrofone oder eines Richtmikrofons kann eine die erfassten Audiodaten aussendende Schallquelle lokalisiert werden. Eine entsprechende Lokalisierungsinformation kann mit den erfassten Bilddaten abgeglichen werden.

Gemäß einer Ausführungsform umfasst das Verfahren zum Überlagern eines Abbilds einer realen Szenerie mit virtuellen Bild- und Audiodaten die folgenden Schritte:
Einlesen von optischen und beziehungsweise oder akustischen Bild- und Audiodaten, wobei die Bild- und Audiodaten ein von einer Umfelderfassungseinrichtung eines mobilen Geräts erfasstes Abbild der realen Szenerie repräsentieren;
Bestimmen von Markerdaten aus den Bild- und Audiodaten, wobei die Markerdaten ein Abbild und eine Positionierung eines in der realen Szenerie angeordneten Markers repräsentieren;
Einlesen von virtuellen Bild- und Tondaten, wobei die virtuellen Daten aus einer Mehrzahl virtueller Daten unter Verwendung der Markerdaten ausgewählte dreidimensionale oder Abfolge zweidimensionaler Aufnahmen von Bild- und Tondaten repräsentieren, wobei die virtuellen Bild- und Tondaten eine Darstellungsanweisung zum Darstellen des virtuellen Bilds und eine Positionierungsanweisung zum Positionieren des virtuellen Bilds sowie eine Auslöseposition zum Abspielen der virtuellen Audiodaten umfassen;
Bestimmen von Objektdaten aus den Bild- und Tondaten, wobei die Objektdaten ein Abbild und eine Positionierung eines Objektabschnitts eines im Umfeld des Markers in der realen Szenerie angeordneten optisch beziehungsweise akustische erkennbaren Objekts repräsentieren;
Ermitteln einer Positionierungsvorschrift zum Positionieren des virtuellen Bilds in Bezug zu dem Abbild des Objektabschnitts sowie zur Startposition des Abspielens der Audiodaten unter Verwendung der Objektdaten und der virtuellen Bild- und Tondaten.

Generell können die Bild- und Audiodaten aus realen drei- bzw. einer Abfolge zweidimensionaler Bild- und Tondaten, die Objektdaten aus realen Objektdaten und der Objektabschnitt aus einem realen Objektabschnitt bestehen.

Gemäß einer Ausführungsform kann im Schritt des Ermittelns die Positionierungsvorschrift unter Verwendung der Markerdaten oder zumindest eines Teils der Markerdaten ermittelt werden. Unter in festgelegter Zeitabfolge durchgeführter Festlegung weiterer Ankerpunkte und/oder Ankerlinien kann das optischen und akustische Abbild der realen Szenerie in der realen Szenerie verfolgt werden, auch wenn der eigentliche Marker von der Umfelderfassungseinrichtung des mobilen Gerätes gar nicht mehr erfasst werden kann.

Gemäß einer Ausführungsform kann eine kontinuierliche Iteration der Schritt des Einlesens, des Bestimmens und des Ermittelns in kurzen Zeitabständen, insbesondere mehrmals pro Sekunde, durchgeführt werden. Beispielsweise können die Schritte zwischen zehnmal und zweihundertmal pro Sekunde (also jede Zehntelsekunde beziehungsweise jede 5/1000 Sekunden) ausgeführt werden.

Der beschriebene Ansatz ermöglicht die Positionierung des virtuellen optischen / akustischen Objektes in einer perspektivisch richtigen Darstellung aus einer weiten Entfernung und relativ uneingeschränkten Position des mobilen Gerätes. Vorteilhafterweise ist es dazu nicht mehr erforderlich, dass das mobile Gerät den Marker erkennt und das zugehörige virtuelle Objekt in einer fixen Position zu diesem Marker positioniert, sondern eben in einer festgelegten Position zu diesen weiteren Ankerpunkten / -linien. Unter einer weiten Entfernung kann eine Entfernung zwischen dem zehnfachen und dem fünftausendfachen der Seitenlänge des Markers, beispielsweise des QR-Codes, verstanden werden. Gemäß einer Ausführungsform wird dabei der Bereich zwischen dem zehnfachen und dem fünfhundertfachen der Seitenlänge des Markers bevorzugt. Bei einer Kantenlänge von 2 cm des Markers entspricht dies einer Entfernung von bis zu 100 m (5000x Kantenlänge). Unter der relativ uneingeschränkten Position können Abweichungen zwischen 0,1° bis 180° in allen drei Achsen verstanden werden. Damit sollen 360° rundum abgedeckt sein. Es ist auch nicht erforderlich, dass sich der Marker ständig im Blickfeld (Umfeld-Erfassungseinrichtung) des mobilen Gerätes befindet.

Der beschriebene Ansatz nutzt gemäß einer Ausführungsform die in dem mobilen Gerät befindlichen Messgeräte - zusätzlich zu der Bilderfassung - zur Messung der Veränderung der relativen Position - nach der Erfassung des Markers - zu der bei der Erst-Erfassung des Markers fixierten Position. Zusätzlich werden Daten eines realen Objektes aus den realen Bild- und Tondaten als Objektabschnitt, auch als "Sekundär-Marker" bezeichnet, verwendet, sodass sich der eigentliche Marker sich nicht mehr in dem Erfassungsbereich der Umfeld-Erfassungseinrichtung befinden muss.

Als entsprechende Messgeräte, auch als Erkennungseinrichtungen oder Messsensoren bezeichnet, können im mobilen Gerät, beispielsweise im Smartphone oder Tablet, die im Folgenden genannten Einrichtungen - nach der einmaligen Erfassung des Markers - genutzt werden, um eine Abweichung von der Erst-Position zu bestimmen. Dabei können einzelne Messsensoren oder auch beliebige Kombinationen gewählt werden.

Beschleunigungssensor: einerseits zur Messung von translatorischen Bewegungen des mobilen Geräts, andererseits zur Bestimmung der Richtung der Erd-Gravitation relativ zum Gerät und somit Ausrichtung/Drehung des Geräts.

Rotationssensor: zur Messung von rotatorischen Bewegungen des mobilen Geräts.

Magnetometer: zur Messung des Erdmagnetfelds und somit horizontalen Drehung des mobilen Geräts.

GPS-Empfänger: optional bei sehr großen Abständen und zur groben Positionierung mit einer Genauigkeit von ± 2 Metern.

Mikrofon: zur Erfassung und Messung einzelner Schallquellen und oder eines allgemeinen Hintergrundgeräusches. Dabei sind Frequenzen im hörbaren Bereich (20 - 20000Hz) bevorzugt, es können aber auch Frequenzen im Ultraschallbereich verwendet werden.

Dabei ist die Nutzung von Beschleunigungssensor und Rotationssensor als Ergänzung zur Bilderfassungseinrichtung bevorzugt.

Die Bilderfassungseinrichtung kann auf sichtbares Licht (400-800nm) beschränkt sein, kann aber auch andere Spektralbereiche zusätzlich oder ausschließlich erfassen (z.B. zusätzlich oder auch ausschließlich IR- oder UV-Licht).

Beispielsweise können Messwerte eines entsprechenden Messgerätes verwendet werden, um eine durch eine Bewegung des mobilen Geräts hervorgerufene Verschiebung des Objektabschnitts oder des Abbilds des Objektabschnitts zu bestimmen. Gemäß einer Ausführungsform wird ein die Verschiebung repräsentierender Wert verwendet, um im Schritt des Ermittelns die Positionierungsvorschrift zum Positionieren des virtuellen Bilds in Bezug zu dem Abbild des Objektabschnitts zu ermitteln.

Somit kann die Positionierungsvorschrift beispielsweise unter Verwendung eines Messwertes eines Messgerätes oder mehrerer Messgeräte, beispielsweise eines Beschleunigungssensors, eines Rotationssensors, eines Magnetometers oder eines GPS-Empfängers, des mobilen Geräts ermittelt werden.

Damit ist weiter ein technisches Problem gelöst, das dann besteht, wenn sich das virtuelle Objekt in der Realität bewegen soll. Wenn bei der Verfolgung dieser Bewegung der Marker aus dem Blickfeld der Umfeld-Erfassungseinrichtung verschwindet, bricht die virtuelle Darstellung nicht zusammen. Damit können nun auch Bildfolgen in einem weiten Umgebungsbereich dargestellt werden.

Zusätzlich können nun an verschiedenen frei gewählten Positionen Audiodaten zur realistischeren Darstellung des virtuellen Objektes abgespielt werden.

Gemäß einer Ausführungsform umfasst das Verfahren einen Schritt des Bereitstellens zumindest eines Teils der Markerdaten an eine Schnittstelle zu einer externen Einrichtung. In diesem Fall können im Schritt des Einlesens von virtuellen dreidimensionalen oder ausgewählten zweidimensionalen beziehungsweise einer Abfolge dieser Bild- und Audiodaten die virtuellen Bild- und Audiodaten über die Schnittstelle zu der externen Einrichtung, beispielsweise einem Server, eingelesen werden. Bei der genannten Schnittstelle kann es sich beispielsweise um eine Funkschnittstelle handeln. Vorteilhafterweise kann die Auswahl der virtuellen Bild- und Audiodaten unter Verwendung der externen Einrichtung durchgeführt werden. Dadurch kann Speicherplatz auf dem mobilen Gerät eingespart werden und es kann sichergestellt werden, dass stets aktuelle virtuelle Bild-und Audiodaten zur Verfügung stehen.

Das Verfahren kann einen Schritt des Auswählens der virtuellen Bild- und Audiodaten aus der Mehrzahl virtueller Bild- und Audiodaten unter Verwendung der Markerdaten umfassen. Der Schritt des Auswählens kann unter Verwendung einer externen Einrichtung oder einer Einrichtung des mobilen Geräts erfolgen. Letzteres bietet den Vorteil, dass das Verfahren autark auf dem mobilen Gerät ausgeführt werden kann. Die virtuellen Bild- und Audiodaten können ausgewählt werden, indem beispielsweise das Abbild des Markers oder eine Identifikation des Markers mit der Mehrzahl von virtuellen Bildern zugeordneten Abbildern oder Identifikationen potenzieller Marker verglichen wird und dasjenige der virtuellen Bilder ausgewählt wird, bei dem sich eine Übereinstimmung ergibt. Auf diese Weise kann das passende virtuelle Bild- und Audiodaten mit hoher Sicherheit ausgewählt werden.

Dazu kann das Verfahren einen Schritt des Ermittelns einer Identifikation des Markers unter Verwendung der Markerdaten umfassen. Im Schritt des Auswählens können die virtuellen Bild- und Audiodaten dann unter Verwendung der Identifikation ausgewählt werden. Unter einer Identifikation kann beispielsweise ein Code oder eine Zeichenfolge verstanden werden.

Beispielsweise kann der Marker einen maschinenlesbaren Code repräsentieren, der eine entsprechende Identifikation des Markers umfasst. In diesem Fall kann die Identifikation des Markers im Schritt des Bestimmens von Markerdaten als Teil der Markerdaten bestimmt werden. Unter Verwendung eines maschinenlesbaren Codes kann das Abbild des Markers sehr einfach ausgewertet werden.

Das Verfahren kann einen Schritt des Verwendens der Positionierungsvorschrift umfassen, um ein weiteres Abbild der realen Szenerie mit den virtuellen Bild- und Audiodaten zu überlagern. Vorteilhafterweise kann die einmal bestimmte Positionierungsvorschrift verwendet werden, um die virtuellen Bild- und Audiodaten zeitlich aufeinanderfolgenden Abbildern der realen Szenerie zu überlagern.

Dazu kann der Schritt des Verwendens beispielsweise einen Schritt des Einlesens von weiteren Abbilddaten umfasst, die das von der Umfelderfassungseinrichtung des mobilen Geräts erfasste weitere Abbild der realen Szenerie repräsentieren, einen Schritt des Bestimmens einer Positionierung eines weiteren Abbilds des Objektabschnitts aus den weiteren Abbilddaten - die entweder als dreidimensionale Punkte in einem Koordinatensystem oder als Punkt und Vektoren oder als Auswahl zweidimensionaler Fotografien vorliegen - umfassen, und einen Schritt des Erstellens überlagerter Bild- und Audiodaten unter Verwendung der weiteren Abbilddaten, des weiteren Abbilds des Objektabschnitts und der Positionierungsvorschrift umfassen, wobei die überlagerten Bild-und Audiodaten eine Überlagerung des weiteren Abbilds der realen Szenerie mit den virtuellen Bild- und Audiodaten repräsentieren. In dem Schritt des Bestimmens der Positionierung kann die Positionierung des weiteren Abbilds des Objektabschnitts innerhalb des weiteren Abbilds der realen Szenerie bestimmt werden. Somit können optische und akustische Abbilder des Objektabschnitts in zeitlich und räumlich passenden Abbildern der realen Szenerie als Ankerpunkte für die virtuellen Bild- und Audiodaten eingesetzt werden. Im Schritt des Erstellens überlagerter Bild- und Audiodaten können die virtuellen Bild- und Audiodaten unter Verwendung der Darstellungsanweisung dargestellt werden.

Das Verfahren kann einen Schritt des Anzeigens einer Überlagerung des weiteren Abbilds der realen Szenerie mit den virtuellen Bild- und Audiodaten unter Verwendung einer Anzeige- und Wiedergabeeinrichtung des mobilen Geräts umfassen. Beispielsweise können dazu die bereits genannten überlagerten Bild- und Audiodaten an die Anzeige- und Wiedergabeeinrichtungen bereitgestellt werden. Bei der Anzeigeeinrichtung kann es sich beispielsweise um einen Bildschirm oder ein Display, bei der Wiedergabeeinrichtung um einen Lautsprecher oder eine Schnittstelle zur Stereowiedergabe handeln.

Das Verfahren kann einen Schritt des Erfassens der Bild- und optional der Audiodaten unter Verwendung der zumindest einen Umfelderfassungseinrichtung des mobilen Geräts umfassen. Beispielsweise können zeitlich fortlaufend Bild- und Audiodaten erfasst werden, sodass zeitlich fortlaufend Abbilder der realen Szenerie bereitgestellt werden können. In die einzelnen Abbilder der realen Szenerie können jeweils die virtuellen Bild- und Audiodaten eingeblendet werden.

Gemäß unterschiedlicher Ausführungsbeispiele können auch mehrere virtuelle dreidimensionale Objekte oder zweidimensionale Bilder und Audiodaten zur Überlagerung verwendet werden. In diesem Fall können im Schritt des Einlesens mehrere virtuelle Bild-und Audiodaten eingelesen werden oder die virtuellen Bild- und Audiodaten können Darstellungsanweisungen und Positionierungsanweisungen zum Darstellen und Positionieren der Mehrzahl von virtuellen Bildern und Audiodaten umfassen.

Ebenso können mehrere Objektabschnitte eines oder unterschiedlicher Objekte verwendet werden. In diesem Fall können im Schritt des Bestimmens der Objektdaten mehrere Objektdaten bestimmt werden oder die Objektdaten können Abbilder und Positionierungen der Mehrzahl von Objektabschnitten repräsentieren. Im Schritt des Ermittelns der Positionierungsvorschrift können entsprechend mehrere Positionierungsvorschriften zum Positionieren des virtuellen Bilds in Bezug zu einzelnen Objektabschnitten ermittelt werden. Alternativ kann eine Positionierungsvorschrift ermittelt werden, die geeignet ist, um die das virtuellen Bild- und Audiodaten in Bezug zu den Abbildern der Mehrzahl von Objektabschnitten zu positionieren. Die Verwendung einer Mehrzahl von Objektabschnitten bietet den Vorteil, dass die virtuellen Bild- und Audiodaten sehr genau positioniert werden können und auch dann noch positioniert werden können, wenn in einem Abbild der realen Szenerie nicht alle verwendeten Objektabschnitte abgebildet sind.

Der hier vorgestellte Ansatz schafft ferner eine Vorrichtung, die ausgebildet ist, um die Schritte einer Variante eines hier vorgestellten Verfahrens in entsprechenden Einrichtungen durchzuführen, anzusteuern bzw. umzusetzen. Auch durch diese Ausführungsvariante der Erfindung in Form einer Vorrichtung kann die der Erfindung zugrunde liegende Aufgabe schnell und effizient gelöst werden.

Die Vorrichtung kann ausgebildet sein, um Eingangssignale einzulesen und unter Verwendung der Eingangssignale Ausgangssignale zu bestimmen und bereitzustellen. Ein Eingangssignal kann beispielsweise ein über eine Eingangsschnittstelle der Vorrichtung einlesbares Sensorsignal darstellen. Ein Ausgangssignal kann ein Steuersignal oder ein Datensignal darstellen, das an einer Ausgangsschnittstelle der Vorrichtung bereitgestellt werden kann. Die Vorrichtung kann ausgebildet sein, um die Ausgangssignale unter Verwendung einer in Hardware oder Software umgesetzten Verarbeitungsvorschrift zu bestimmen. Beispielsweise kann die Vorrichtung dazu eine Logikschaltung, einen integrierten Schaltkreis oder ein Softwaremodul umfassen und beispielsweise als ein diskretes Bauelement realisiert sein oder von einem diskreten Bauelement umfasst sein.

Von Vorteil ist auch ein Computerprogrammprodukt mit Programmcode, der auf einem maschinenlesbaren Träger wie einem Halbleiterspeicher, einem Festplattenspeicher oder einem optischen Speicher gespeichert sein kann und zur Durchführung des Verfahrens nach einer der vorstehend beschriebenen Ausführungsformen verwendet wird, wenn das Programmprodukt auf einem Computer oder einer Vorrichtung ausgeführt wird.

Ausführungsbeispiele der Erfindung sind in den Zeichnungen dargestellt und in der nachfolgenden Beschreibung näher erläutert. Es zeigt:
- Fig. 1: eine Übersichtsdarstellung eines Verfahrens zum Überlagern eines Abbilds einer realen Szenerie mit virtuellen Bild- und Audiodaten gemäß einem Ausführungsbeispiel;
- Fig. 2: eine Übersichtsdarstellung eines Verfahrens zum Erstellen einer Zuordnungsvorschrift gemäß einem Ausführungsbeispiel;
- Fig. 3: eine schematische Darstellung eines mobilen Geräts gemäß einem Ausführungsbeispiel;
- Fig. 4: ein Ablaufdiagramm eines Verfahrens zum Überlagern eines Abbilds einer realen Szenerie mit virtuellen Bild- und Audiodaten gemäß einem Ausführungsbeispiel; und
- Fig. 5: ein QR-Code Platzierungsquadrat mit binären Konturen gemäß einem Ausführungsbeispiel.

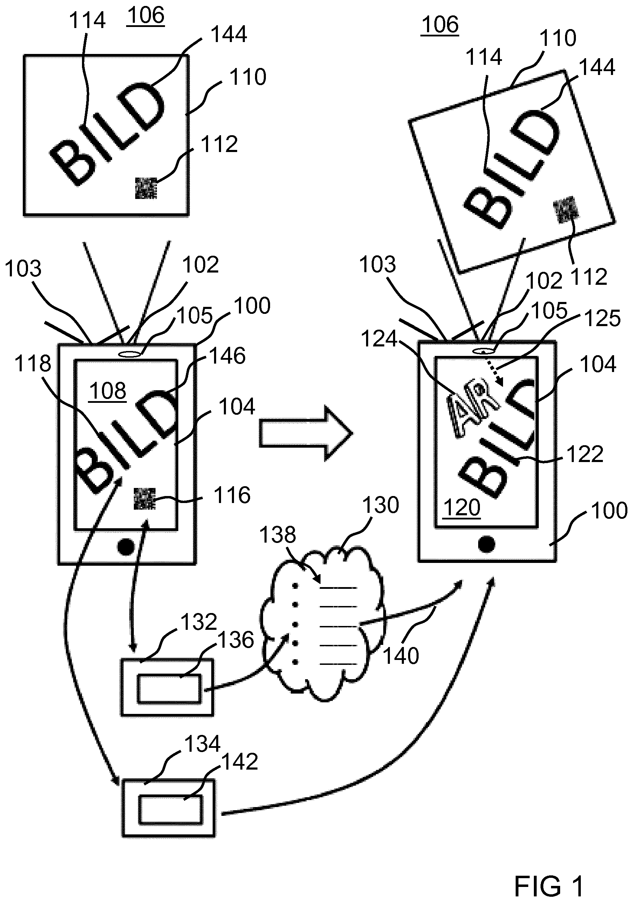

Fig. 1 zeigt eine Übersichtsdarstellung eines Verfahrens zum Überlagern eines Abbilds einer realen Szenerie mit virtuellen Bild- und Audiodaten gemäß einem Ausführungsbeispiel .

In der linken Hälfte von Fig. 1 ist ein mobiles Gerät 100, beispielsweise ein Smartphone, gezeigt, das eine Umfelderfassungseinrichtung 102, eine weitere Umfelderfassungseinrichtung 103, eine Anzeigeeinrichtung 104 und eine Ausgabeeinrichtung 105 aufweist. Die Umfelderfassungseinrichtungen 102 und 103 sind gemäß diesem Ausführungsbeispiel als eine Kamera und ein Mikrophon ausgeführt, die ausgebildet sind, um eine sich in einem Erfassungsbereich der Umfelderfassungseinrichtungen 102, 103 befindliche reale Szenerie 106, auch reale Umgebung genannt, zu erfassen. Die Anzeigeeinrichtungen 104 und 105 sind gemäß diesem Ausführungsbeispiel als ein Display sowie ein Lautsprecher ausgeführt, die ausgebildet sind, um einer Bedienperson des mobilen Geräts 104 ein von den Umfelderfassungseinrichtungen 102, 103 erfasstes Abbild 108 der realen Szenerie 106 anzuzeigen.

In der realen Szenerie 106 ist gemäß diesem Ausführungsbeispiel ein Objekt 110 angeordnet, auf dessen äußerer Oberfläche ein Marker 112 angeordnet ist. Beispielsweise kann es sich bei dem Objekt 110 um ein beliebiges Bild oder einen Gegenstand, handeln. Das Objekt 110 liegt teilweise und der Marker 112 vollständig in dem Erfassungsbereich der Umfelderfassungseinrichtungen 102, 103. Insbesondere liegt zumindest ein Objektabschnitt 114 des Objekts 110 in dem Erfassungsbereich der Umfelderfassungseinrichtungen 102, 103. Somit umfasst das Abbild 108 ein Abbild 116 des Markers 112 und zumindest ein Abbild 118 des Objektabschnitts 114.

In der rechten Hälfte von Fig. 1 ist das mobile Gerät 100 zu einem im Vergleich zu der Darstellung auf der linken Hälfte zeitlich nachfolgenden Zeitpunkt gezeigt. Aufgrund einer zwischenzeitlichen Bewegung des mobilen Geräts 100 hat sich die reale Szenerie 106 aus Sicht der Umfelderfassungseinrichtungen 102, 103 leicht verändert, sodass von der Anzeigeeinrichtung 104 ein in Bezug zu dem Abbild 116 ein leicht verändertes weiteres Abbild 120 angezeigt wird. Beispielsweise kann das weitere Abbild 120 die reale Szenerie 106 im Vergleich zu dem Abbild 108 in einer anderen Perspektive, auch Tonperspektive, oder einen anderen Ausschnitt der realen Szenerie 106 abbilden. Beispielhaft ist der andere Ausschnitt derart, dass das weitere Abbild 120 ein weiteres Abbild 122 des Objektabschnitts 114 jedoch kein weiteres Abbild des Markers 112 umfasst. Dennoch können unter Verwendung des beschriebenen Verfahrens virtuelle Bild- und Audiodaten 124, 125 dem weiteren Abbild 120 überlagert werden. Gemäß einem Ausführungsbeispiel sollen die virtuellen Bild- und Audiodaten 124, 125 dem weiteren Abbild 120 in einer vorbestimmten Position und/oder vorbestimmten Lage überlagert werden. Eine solche vorbestimmte Überlagerung ist gemäß einem Ausführungsbeispiel solange möglich, wie das weitere Abbild 120 ein geeignetes weiteres Abbild 122 des Objektabschnitts 106 umfasst, der als Ankerpunkt für dies virtuellen Bild- und Audiodaten 124, 125 verwendet werden können.

Die Schritte des Verfahrens können ausschließlich unter Verwendung von Einrichtungen des mobilen Geräts 100 oder zusätzlich unter Verwendung zumindest einer externen Einrichtung, die hier beispielhaft als Cloud dargestellt ist, ausgeführt werden. Beispielsweise kann die externe Einrichtung 130 online mit dem mobilen Gerät 100 gekoppelt sein.

Gemäß einem Ausführungsbeispiel werden die virtuellen Bild- und Audiodaten 124, 125 nur unter Verwendung von durch die Umfelderfassungseinrichtung 102 erfasste Daten generiert, d.h. es werden keine realen Audiodaten verwendet.

Das Verfahren kann fortlaufend ausgeführt werden oder mit einem Content-Aufruf oder einer von der Bedienperson angeforderten Betrachtung der realen Szenerie 106 unter Verwendung der Anzeigeeinrichtungen 104 gestartet werden.

Das Abbild 108 basiert auf von den Umfelderfassungseinrichtungen 102, 103 oder einer der den Umfelderfassungseinrichtungen 102, 103 nachgeschalteten Auswerteeinrichtungen bereitgestellten Bild- und Audiodaten. Beispielsweise unter Verwendung eines Objekterkennungsverfahrens oder eines anderen geeigneten Bild- und Tonverarbeitungsverfahrens werden, hier schematisch dargestellt, Markerdaten 132 und Objektdaten 134 aus den Bild- und Audiodaten bestimmt. Die Markerdaten 132 werden durch eine geeignete Extraktion aus den Bild- und Audiodaten bestimmt und umfassen dem Marker 112 zugeordnete Identifikationsdaten 136, beispielsweise eine dem Marker 112 zugeordnete Identifikation ID und/oder eine dem Marker 112 zugeordnete Adresse oder einen Zeiger, beispielsweise in Form einer URL. Die Markerdaten 132 oder Teile der Markerdaten 132 oder daraus bestimmte Daten, wie beispielsweise die dem Marker zugeordnete Identifikation können verwendet werden, um unter Verwendung einer Zuordnungsvorschrift 138, beispielsweise einer Zuordnungstabelle, die gemäß diesem Ausführungsbeispiel in einer Speichereinrichtung der externen Einrichtung 130 gespeichert ist, dem Marker 112 zugeordnete virtuelle Bild- und Audiodaten 140 aus einer Mehrzahl von virtuellen Bild- und Audiodaten auszuwählen. Die Mehrzahl von virtuellen Bild- und Audiodaten können in der Zuordnungstabelle 138 in Form von AR-Inhalten gespeichert sein. Die virtuellen Bild- und Audiodaten 140 werden an das mobile Gerät 100 übertragen und zum Anzeigen beziehungsweise der Wiedergabe des virtuellen Bildes 124 verwendet. Das Auswählen der virtuellen Bild- und Audiodaten 140 wird gemäß einem Ausführungsbeispiel nur dann ausgeführt, wenn ein neuer Marker 112 gefunden wird, also beispielsweise das Abbild 116 des Markers 112 bzw. die Identifikationsdaten 136 des Markers 112 erstmalig aus den das Abbild 108 repräsentierenden Bild- und Audiodaten extrahiert wurde.

Die Objektdaten 134 werden durch eine geeignete Extraktion geeigneter Bildbeziehungsweise Tonmerkmale aus den Bild- und Audiodaten bestimmt. Die geeigneten Bild-/Tonmerkmale werden zur Erstellung einer Positionierungsvorschrift 142, auch neuer AR-Marker genannt, beispielsweise zur temporären und lokalen Nutzung verwendet. Die Positionierungsvorschrift 142 wird von dem mobilen Gerät 100, verwendet, um die virtuellen Bild- und Audiodaten 124 auch dann als Überlagerung des Abbilds 106 oder des weiteren Abbilds 120 darstellen zu können, wenn kein Abbild 116 des Markers 112 zur Verfügung steht. Für die Verwendung der Positionierungsvorschrift 142 ist kein Online-Abgleich nötig. Gemäß diesem Ausführungsbeispiel bezieht sich die Positionierungsvorschrift 142 auf den Objektabschnitt 114, der einen natürlichen Marker darstellt.

Gemäß einem Ausführungsbeispiel wird auf diese Weise eine sichere Zuordnung des AR-Inhalts anhand einer URL und eine stabile 3-D-Verfolgung anhand eines neuen, und deswegen aktuellen, natürlichen Markers ermöglicht.

Gemäß einem Ausführungsbeispiel werden zumindest zwei natürliche Marker, also beispielsweise der Objektabschnitt 114 und ein weiterer Objektabschnitt 144 des Objekts 110 verwendet, um die virtuellen Bild- und Audiodaten 124, 125 in dem weiteren Abbild 120 positionieren zu können. In diesem Fall bezieht sich die Positionierungsvorschrift 142 auf die beiden Objektabschnitte 114, 144 bzw. deren Abbilder 118, 122, 146. In dem weiteren Abbild 120 der realen Szenerie 106 wird in dem in Fig. 1 gezeigten Ausführungsbeispiel der weitere Objektabschnitt 144 nicht abgebildet. Dennoch können die virtuellen Bild- und Audiodaten 124, 125 mithilfe des weiteren Abbilds 122 des Objektabschnitts 114 positioniert werden.

Der beschriebene Ansatz basiert gemäß einem Ausführungsbeispiel auf einer Kombination zweier Verfahren, mit denen dreidimensionale Positionen von Objekten aus Kamera-Bildern extrahiert werden können.

Bei dem ersten dieser Verfahren werden dazu vordefinierte geometrische Formen als Marker 112 verwendet, die im Bereich des Kamerabilds platziert werden, z.B. QR-Codes. Anhand der bekannten Form eines solchen Markers 112 und dessen Abbild 116 im Kamerabild 108 kann per Bildverarbeitung dessen dreidimensionale Lage im Raum bestimmt werden. Vorteile des ersten Verfahrens sind, dass durch vordefinierte Gestaltungsregeln des Markers 112 dieser zweifelsfrei im Kamerabild 108 identifiziert werden kann und dass so zudem zusätzliche Informationen direkt im Erscheinungsbild des Markers 112 kodiert werden können, wie z.B. die ID eines Markers 112 oder ein Weblink per QR-Code. So kann durch ein einmalig definiertes Kodierungsschema, z.B. schwarz-weiß-bits des QR-Codes, eine sehr große Anzahl verschiedener Marker zweifelsfrei optisch voneinander unterschieden werden.

Nachteil ist dagegen, dass diese Marker 112 durch die nötige genau definierte Form kaum robust gegenüber kleinen Störungen im Kamerabild 108 sind. Solche kleinen Störungen können z.B. eine leichte Fokus-Unschärfe, eine Bewegungsunschärfe oder einen steilen Betrachtungswinkel darstellen. Dies führt dazu, dass die dreidimensionale Lage eines dieser Marker 112 nur dann korrekt extrahiert werden kann, wenn er komplett fokussiert ist, parallel zur Bildebene und unverdeckt im Kamerabild 108 zu sehen ist und die Kamera 102 relativ zum Marker 112 nahezu ruht. Damit wird z.B. die kontinuierlich lagerichtige AR-Einblendung eines virtuellen 3D-Objekts 124 auf Basis eines Markers 112 in Form eines QR-Codes nahezu unmöglich. Bei entsprechend großer Gestaltung eines geometrischen Markers 112 wird dieses Problem leicht verbessert, allerdings einhergehend mit dem weiteren Nachteil, dass dieser dann sehr prominent und groß in der Szene 106 platziert werden muss, was für die meisten Anwendungen ungeeignet ist.

Bei dem zweiten dieser Verfahren, das auch als Natural Feature Tracking bzw. NFT bezeichnet werden kann, werden Abbilder von in der realen Umgebung 106 befindlichen Objekten 110, z.B. dem Cover-Bild eines Flyers, im Vorfeld als Marker definiert und deren natürliche optische Merkmale 114, z.B. markante Punkte, Kantenverläufe oder Farben, zunächst durch einen Algorithmus in geeigneter Form vom Original extrahiert, also sozusagen angelernt. Zur AR-Positionsbestimmung, also zur Bestimmung der Position eines zu überlagernden virtuellen Bildes 124, wird dann im Kamerabild 108 nach diesen zuvor angelernten natürlichen Merkmalen 114 gesucht und durch Optimierungsverfahren wird zum einen entschieden, ob sich das gesuchte Objekt 110 gerade im Kamerabild 108 befindet und zum anderen dessen Lage und Position anhand der Anordnung von dessen Einzelmerkmalen 114 geschätzt. Vorteil dabei ist, dass durch das optimierungsbasierte Verfahren große Robustheit gegenüber Störungen besteht. So können Positionen von Marker-Objekten 114 auch noch in unscharfen Kamerabildern 108, 120, bei teilweiser Verdeckung und sehr steilen Winkeln erkannt werden. Weitergehende Verfahren (z.B. SLAM) ermöglichen sogar, auf Basis einer initialen Erkennung eines Marker-Objekts 114 im Kamerabild 108, 120, dessen Modell fortwährend mit Merkmalen aus der aktuellen Umgebung zu erweitern, sodass dessen Lage im Raum teilweise auch dann noch richtig bestimmt werden kann, wenn es selbst gar nicht mehr im Kamerabild 120 zu sehen ist. Dieses Verfahren hat allerdings signifikante Nachteile, insbesondere wenn eine große Anzahl von verschiedenen Markern damit erkannt werden soll. So muss zunächst jedes Marker-Objekt 114 bezüglich des natürlichen optischen Erscheinungsbildes bestimmte optische Kriterien erfüllen, um überhaupt im Kamerabild 108, 120 erkennbar zu sein.

Außerdem müssen sich zur eindeutigen Identifizierung alle erkennbaren Marker 114 in ihrem optischen Erscheinungsbild deutlich voneinander unterscheiden - je größer die Anzahl der erkennbaren Marker 114, desto höher die Wahrscheinlichkeit einer Fehl-Zuordnung. Dies ist insbesondere problematisch, wenn viele optisch ähnliche Objekte 100, z.B. Visitenkarten, innerhalb einer Datenbank unterschieden werden sollen. Weiterhin muss zum Zeitpunkt der Erkennung bereits eine Datenbank mit den natürlichen Merkmalen aller erkennbaren Marker existieren und diese komplette Datenbank mit dem Kamerabild 108, 120 abgeglichen werden, um herauszufinden, ob sich einer der Marker 114 im Kamerabild befindet. Bei einem System wie einer Smartphone AR-App mit einer ständig wachsenden Marker-Datenbank erfordert dies, die jeweils aktuelle Version der Datenbank an einer zentralen Stelle (online) vorzuhalten, während jedes Smartphone 100 zur Analyse jedes einzelnen Kamera-Bildes 108, 120 einen rechentechnisch aufwendigen Bild-Such-Auftrag an diese Datenbank schicken muss.

Der hier beschriebene Ansatz basiert gemäß einem Ausführungsbeispiel auf einer Kombination der beiden obigen Verfahren, bei der zur Erkennung und 3D-Positionsbestimmung von Marker-Objekten im Kamerabild 108, 120 beide Verfahren in nacheinander geschalteten, miteinander verknüpften, Stufen durchgeführt werden: In der ersten Stufe wird zur reinen Identifikation virtueller Bild- und Audiodaten 140 eines virtuellen Bildes 124, hier als AR-Inhalt 124 bezeichnet, im Kamerabild 108 eine geometrische, vordefinierte Marker-Gestaltung, z.B. QR-Code oder ein Strichcode, als Abbild 116 des Markers 112 verwendet. Zum Beispiel kann das Abbild 116 des Markers 112 nur 0,6% und sogar nur 0,1% oder gar 0,01% des Abbilds 108 der realen Szene 106 einnehmen. Dies entspricht 0,5 cm Seitenlänge des Abbilds 116 des Markers 112 auf einem DINA4 Blatt.

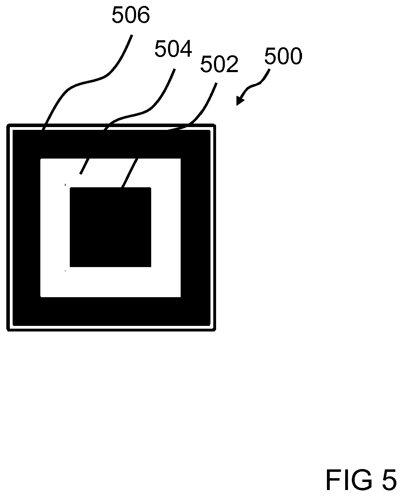

Die Erkennung eines Markers 112 in Form eines QR-Codes im jeweils untersuchten Kamerabild wird später anhand von Fig. 5 detailliert beschrieben.

Gemäß einem Ausführungsbeispiel erfolgt somit der Einbezug des Mikrofons 103 bzw. des Lautsprechers 105, oder sofern vorhanden der Einbezug mehrerer Mikrofone und/oder mehrerer Lautsprecher des Smartphones 100. Insofern erfolgt die Auswahl der virtuellen Daten 140 abhängig von der Erfassung eines Primär-Markers 116 (QR-Codes / Barcodes) durch die Kamera 102 des Smartphones 100. Die ausgewählten virtuellen Daten 140 bestehen zum einen nun jedoch nicht nur aus Bilddaten sondern auch aus Ton-Daten, die in Abhängigkeit der weiteren Bewegung des in die reale Szene eingeblendeten virtuellen Objektes 124 abgespielt werden.

Zur vereinfachten Vorstellung: ein dreidimensionaler Fernsehfilm (der mit einer Reihe von Kameras aus 360° - zum Beispiel 36 Kameras mit jeweils 10° Abstand oder auch 72 Kameras mit jeweils 5° Abstand aufgenommen wurde), der sich im freien Raum des Wohnzimmers abspielt. Selbstverständlich werden die virtuellen Bild-und Tonobjekte 140 jeweils perspektivisch richtig dargestellt, auch wenn das Smartphone 100 sich um die Szenerie herum bewegt, also Sekundär-Marker 122 verwendet werden. Insbesondere für die korrekte Darstellung der Tonobjekte ist es dann anstrebenswert, die Audiodaten über einen Stereo-Kopfhörer abzuspielen. Ein entsprechender Stereo-Kopfhörer kann über eine geeignete Schnittstelle mit dem Smartphone 100 verbunden werden. In einer weiteren Ausführung werden diese Sekundär-Marker 122 nicht nur Bild-Merkmale sondern auch TonMerkmale der realen Szenerie enthalten. Dies umfasst beispielsweise singuläre Schallquellen spezifischer Töne oder eben auch die spezifische Anordnung von Musikinstrumenten.

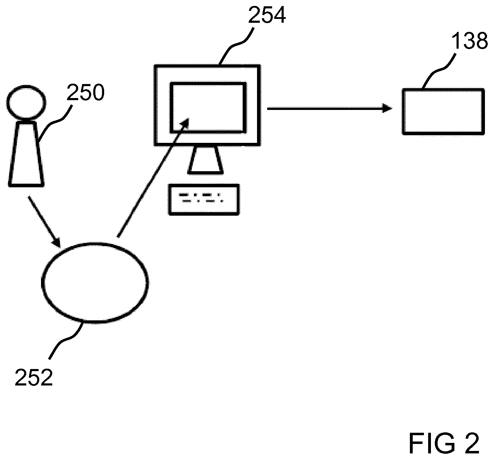

Fig. 2 zeigt eine Übersichtsdarstellung eines Verfahrens zum Erstellen einer Zuordnungsvorschrift 138 gemäß einem Ausführungsbeispiel. Die Zuordnungsvorschrift 138 kann beispielsweise in dem in Fig. 1 gezeigten externen Gerät abgelegt werden.

Eine Bedienperson 250 stellt 3D-AR-Inhalte 252 bereit, beispielsweise in Form einer Mehrzahl von virtuellen Bild- und Audiodaten. Ein Web-Interface 254 wird verwendet, um basierend auf den 3D-AR-Inhalten 252 die Zuordnungsvorschrift 138 zu erstellen oder zu aktualisieren. Die Zuordnungsvorschrift 138 umfasst gemäß einem Ausführungsbeispiel für jeden 3D-AR-Content der 3D-AR-Inhalte eine Verknüpfung mit einer spezifischen, einzigartigen URL.

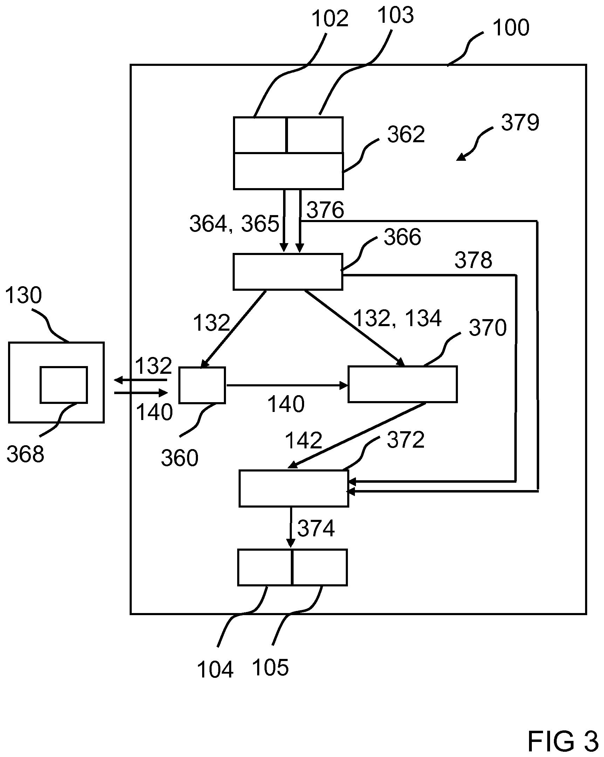

Fig. 3 zeigt eine schematische Darstellung eines mobilen Geräts 100 gemäß einem Ausführungsbeispiel. Bei dem mobilen Gerät 100 kann es sich beispielsweise um das in Fig. 1 gezeigte mobile Gerät handeln. Das mobile Gerät 100 weist Umfelderfassungseinrichtungen 102, 103 und Anzeigeeinrichtungen 104, 105 zum Anzeigen eines Abbilds einer von der Umfelderfassungseinrichtung 102 erfassten realen Szenerie auf. Dem Abbild können virtuelle Bild- und Audiodaten überlagert werden. Gemäß diesem Ausführungsbeispiel umfasst das mobile Gerät 100 eine Schnittstelle 360, beispielsweise Schnittstelle zur drahtlosen Datenübertragung, zu einer externen Einrichtung 130. Gemäß einem Ausführungsbeispiel ist die Umfelderfassungseinrichtung 102 auf einer Rückseite und die Anzeigeeinrichtung 104 auf einer Vorderseite des mobilen Geräts 100 angeordnet.

Das mobile Gerät 100 weist eine mit den Umfelderfassungseinrichtungen 102, 103 gekoppelte Einleseeinrichtung 362 auf, die ausgebildet ist, um Bild- und Audiodaten 364, 365 der Umfelderfassungseinrichtungen 102, 103 als Rohdaten oder bereits aufbereitete Daten einzulesen. Beispielsweise handelt es sich bei der Einleseeinrichtung 362 um eine Schnittstelle zu den Umfelderfassungseinrichtungen 102, 103. Die Bild- und Audiodaten 364, 365 stellen ein von den Umfelderfassungseinrichtungen 102, 103 erfasstes Abbild der realen Szenerie dar. Die von der Einleseeinrichtung 362 eingelesenen Bild- und Audiodaten 364, 365 werden in einer Bestimmungseinrichtung 366 des mobilen Geräts 100 weiterverarbeitet. Insbesondere werden aus den Bilddaten 364 und optional aus den Audiodaten 365 Markerdaten 132 und Objektdaten 134 bestimmt, beispielsweise extrahiert. Die Markerdaten 132 stellen ein Abbild und eine Positionierung eines in der realen Szenerie angeordneten Markers, beispielsweise des in Fig. 1 gezeigten geometrischen Markers 112, dar. Die Objektdaten 134 stellen ein Abbild und eine Positionierung eines Objektabschnitts eines im Umfeld des Markers in der realen Szenerie angeordneten Objekts dar. Beispielsweise kann es sich bei dem Objektabschnitt um den in Fig. 1 gezeigten Objektabschnitt 114 handeln, der als ein natürlicher Marker verwendet werden kann. Dazu ist die Bestimmungseinrichtung 366 ausgebildet, um zunächst das Abbild des Markers in dem Abbild der realen Szenerie zu erkennen und anschließend die dem Abbild des Markers zugeordneten Markerdaten aus den Bild- und Audiodaten 364, 365 zu bestimmen. Entsprechend ist die Bestimmungseinrichtung 366 ausgebildet, um zunächst ein oder mehrerer geeignete Abbilder von Objektabschnitten in dem Abbild der realen Szenerie zu erkennen und anschließend die, dem oder den Abbildern der geeigneten Objektabschnitte zugeordneten Objektdaten, aus den Bild- und Audiodaten 364, 365 zu bestimmen. Gemäß einem Ausführungsbeispiel werden dazu nur die Bilddaten 364 und nicht die Audiodaten 365 verwendet.

Gemäß diesem Ausführungsbeispiel werden die Markerdaten 132 an die externe Schnittstelle 360 bereitgestellt und über die externe Schnittstelle 360, beispielsweise eine Funkschnittstelle, an die externe Einrichtung 130, beispielsweise in Form eines externen Geräts, übertragen. Die externe Einrichtung 130 weist eine Auswahleinrichtung 368 auf, die ausgebildet ist, um unter Verwendung einer Zuordnungsvorschrift den Markerdaten 132 zugeordneten virtuellen Bild- und Audiodaten 140 aus einer Mehrzahl virtueller Bild- und Audiodaten auszuwählen und an die externe Schnittstelle 360 des mobilen Geräts 100 bereitzustellen. Alternativ können an die Einleseeinrichtungen 360 und/oder die externe Einrichtung 130 nur Teile der Bild- und Audiodaten 132 oder die Bild- und Audiodaten 132 in einer weiter verarbeiteten Form bereitgestellt werden. Die externe Schnittstelle 360 ist ausgebildet, um die virtuellen Bild- und Audiodaten 140 an eine Bestimmungseinrichtung 370 bereitzustellen. Die virtuellen Bild- und Audiodaten 140 umfassen eine Darstellungsanweisung zum Darstellen eines virtuellen Bilds und eine Positionierungsanweisung zum Positionieren des virtuellen Bilds oder des Abbilds eines Objektes sowie eine Anweisung zur Abspielpositionierung der virtuellen Audiodaten. Die Bestimmungseinrichtung 370 ist ferner ausgebildet, um die Markerdaten 132 und die Objektdaten 134 zu empfangen. Die Bestimmungseinrichtung 370 ist ausgebildet, um eine Positionierungsvorschrift 142 zum Positionieren des virtuellen Bilds in Bezug zu dem Abbild des Objektabschnitts unter Verwendung der Markerdaten 132, der Objektdaten 134 und der virtuellen Bild- und Audiodaten 140 zu bestimmen.

Gemäß diesem Ausführungsbeispiel umfasst das mobile Gerät 100 eine Steuereinrichtung 372 zum Ansteuern der Anzeigeeinrichtung 104. Die Steuereinrichtung 372 ist ausgebildet, um überlagerte Bild- und Audiodaten 376, beispielsweise in Form eines Steuersignals zum Steuern einer von der Anzeigeeinrichtung 104 dargestellten Anzeige an die Anzeigeeinrichtung 104, 105 bereitzustellen. Die überlagerten Bild- und Audiodaten 376 stellen dabei eine Überlagerung eines weiteren Abbilds der realen Szenerie mit den virtuellen Bild- und Audiodaten dar. Die Steuereinrichtung 372 ist ausgebildet, um die überlagerten Bild- und Audiodaten 376 unter Verwendung der von der Bestimmungseinrichtung 370 bereitgestellten Positionierungsvorschrift 142, weiterer Bild-und Audiodaten 376 und weiterer Objektdaten 378 zu erzeugen. Die weiteren Bild- und Audiodaten 376 stellen ein von den Umfelderfassungseinrichtungen 102, 103 erfasstes weiteres Abbild der realen Szenerie dar. Die weiteren Objektdaten 378 umfassen zumindest eine Positionierung des Objektabschnitts innerhalb des weiteren Abbilds der realen Szenerie.

Gemäß einem Ausführungsbeispiel umfasst die Positionierungsvorschrift 142 die von den virtuellen Bild- und Audiodaten 140 umfasste Darstellungsanweisung zum Darstellen des virtuellen Bilds. Alternativ kann die Darstellungsanweisung separat zu der Positionierungsvorschrift 142 an die Steuereinrichtung 372 übermittelt werden.

Gemäß einem Ausführungsbeispiel ist die Auswahleinrichtung 368 Teil des mobilen Geräts 100. In diesem Fall ist die externe Einrichtung 130 nicht erforderlich und die externe Schnittstelle 360 kann als interne Schnittstelle ausgeführt sein.

Die in Fig. 3 gezeigten Einrichtungen 360, 362, 366, 370, 372 sind nur eine beispielhafte Anordnung von Einrichtungen einer Vorrichtung 379 zum Überlagern eines Abbilds einer realen Szenerie mit virtuellen Bild- und Audiodaten. Zur Umsetzung der Verfahrensschritte eines Verfahrens zum Überlagern eines Abbilds einer realen Szenerie mit virtuellen Bild- und Audiodaten können beispielsweise einige oder alle der Einrichtungen 360, 362, 366, 370, 372 zu größeren Einheiten zusammengefasst werden.

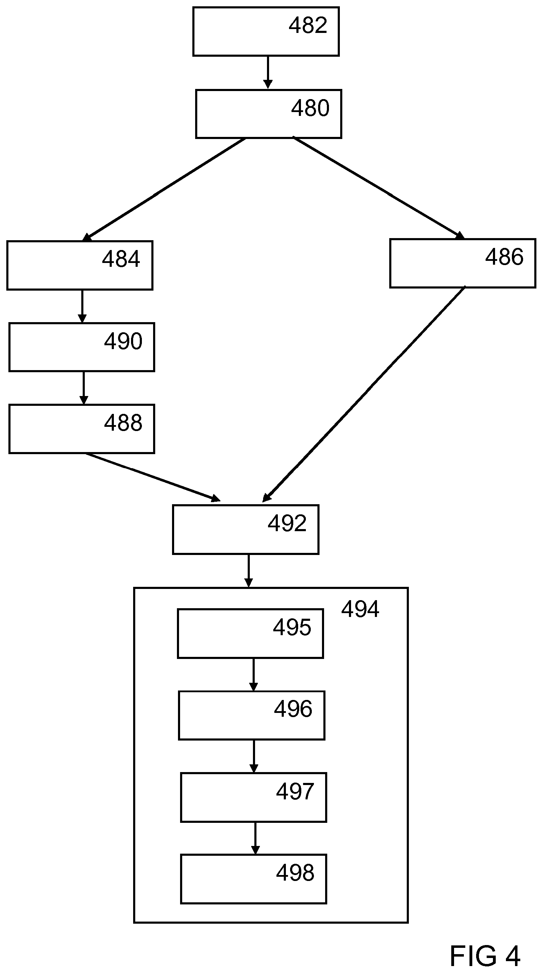

Fig. 4 zeigt ein Ablaufdiagramm eines Verfahrens zum Überlagern eines Abbilds einer realen Szenerie mit virtuellen Bild- und Audiodaten gemäß einem Ausführungsbeispiel. Das Verfahren kann unter Verwendung von Einrichtungen eines anhand der vorangegangenen Figuren beschriebenen mobilen Geräts ausgeführt werden.

In einem Schritt 480 werden Bild- und Audiodaten eingelesen, die ein von den Umfelderfassungseinrichtungen des mobilen Geräts erfasstes Abbild einer realen Szenerie repräsentieren. Die Bild- und Audiodaten können in einem optionalen vorangegangenen Schritt 482 von den Umfelderfassungseinrichtungen erfasst worden sein. Aus den Bild- und Audiodaten werden in einem Schritt 484 Markerdaten bestimmt, die ein Abbild und eine Positionierung eines in der realen Szenerie angeordneten Markers repräsentieren. Entsprechend werden aus den Bild- und Audiodaten in einem Schritt 486 Objektdaten bestimmt, die ein Abbild und eine Positionierung eines Objektabschnitts eines im Umfeld des Markers in der realen Szenerie angeordneten Objekts repräsentieren. In einem Schritt 488 werden virtuelle Bild- und Audiodaten eingelesen, die aus einer Mehrzahl virtueller Bild- und Audiodaten unter Verwendung der Markerdaten ausgewählte Bild- und Audiodaten repräsentieren und eine Darstellungsanweisung zum Darstellen des virtuellen Bilds, eine Positionierungsanweisung zum Positionieren des virtuellen Bilds sowie zum Abspielen der Audiodaten umfassen. In einem optionalen Schritt 490, der auf dem mobilen Gerät oder einer externen Einrichtung ausgeführt werden kann, werden die virtuellen Bild- und Audiodaten unter Verwendung der Markerdaten ausgewählt. Unter Verwendung der Markerdaten, der Objektdaten und der virtuellen Bild- und Audiodaten wird in einem Schritt 492 eine Positionierungsvorschrift ermittelt, die geeignet ist, um die virtuellen Bild- und Audiodaten in Bezug zu dem Abbild des Objektabschnitts darzustellen, beispielsweise als Überlagerung eines weiteren Abbilds der realen Szenerie.

In einem optionalen Schritt 494 wird die Positionierungsvorschrift verwendet, um die Überlagerung des weiteren Abbilds der realen Szenerie mit den virtuellen Bild- und Audiodaten darzustellen, beispielsweise auf den Anzeige- und Wiedergabeeinrichtung des mobilen Geräts.

Der Schritt 494 kann beispielsweise einen Schritt 496 des Einlesens von weiteren Bild- und Audiodaten umfassen, die das weitere Abbild der realen Szenerie repräsentieren, einen Schritt 498 des Bestimmens einer Positionierung eines weiteren Abbilds des Objektabschnitts aus den weiteren Bild- und Audiodaten umfassen und einen Schritt des Erstellens 499 überlagerter Bild- und Audiodaten unter Verwendung der weiteren Bild- und Audiodaten, des weiteren Abbilds des Objektabschnitts und der Positionierungsvorschrift umfassen, wobei die überlagerten Bild- und Audiodaten eine Überlagerung des weiteren Abbilds der realen Szenerie mit den virtuellen Bild- und Audiodaten repräsentieren. In dem Schritt des Bestimmens der Positionierung kann die Positionierung des weiteren optischen und akustischen Abbilds des Objektabschnitts innerhalb des weiteren Abbilds der realen Szenerie bestimmt werden. Somit können Abbilder des Objektabschnitts in zeitlich aufeinanderfolgenden Abbildern der realen Szenerie als Ankerpunkte für die virtuellen Bild-und Audiodaten eingesetzt werden. Im Schritt des Erstellens überlagerter Bild- und Audiodaten können die virtuellen Bild- und Audiodaten unter Verwendung der Darstellungsanweisung dargestellt werden.

Der Schritt 494 kann fortlaufend wiederholt werden, wobei die Positionierungsvorschrift jeweils verwendet wird, um fortlaufend weitere Abbilder der realen Szenerie mit dem virtuellen Bild- und Audiodaten zu überlagern. Die vorangegangenen Schritte brauchen dabei nicht wiederholt ausgeführt werden, da es ausreichend ist, die Positionierungsvorschrift einmal zu bestimmen.

Gemäß einem Ausführungsbeispiel werden im Schritt 486 aus den Bild- und Audiodaten Objektdaten bestimmt, die Abbilder und Positionierungen mehrerer Objektabschnitte, beispielsweise zwei, drei, vier oder mehr Objektabschnitte, eines oder mehrerer im Umfeld des Markers in der realen Szenerie angeordneten Objekte repräsentieren. Auf diese Weise kann die Zahl der Ankerpunkte zum Verankern des virtuellen Bildes in dem weiteren Abbild oder den weiteren Abbildern der realen Szenerie erhöht werden. Für diesen Fall kann im Schritt 492 die Positionierungsvorschrift so ermittelt werden, dass sie geeignet ist, die virtuellen Bild- und Audiodaten in den weiteren Abbildern der realen Szenerie in Bezug zu den optischen und akustischen Abbildern der Objektabschnitte darzustellen. Um diese Darstellung umzusetzen, werden im Schritt 498 des Bestimmens die Positionierungen der einzelnen Abbilder der Objektabschnitte aus den weiteren Bild- und Audiodaten bestimmt. Vorteilhaft können in diesem Fall die virtuellen Bild- und Audiodaten auch dann noch entsprechend der in den virtuellen Bild- und Audiodaten hinterlegten Vorgabe positioniert werden, wenn nicht alle Abbilder der Objektabschnitte von den weiteren Bild- und Audiodaten umfasst sind.

Gemäß einem Ausführungsbeispiel wird die Positionierungsvorschrift im Schritt 492 unter Verwendung eines Messwertes eines Messgerätes, insbesondere eines Beschleunigungssensors, eines Rotationssensors, eines Magnetometers,eines GPS-Empfängers oder eines oder mehrerer Mikrophone des mobilen Geräts ermittelt.

Fig. 5 zeigt ein QR-Code Platzierungsquadrat 500 mit binären Konturen gemäß einem Ausführungsbeispiel, bei dem ein QR-Code als Marker eingesetzt wird.

Zur Erkennung des QR-Codes wird im jeweils untersuchten Kamerabild z.B. zunächst eine Binarisierung durchgeführt, die alle Pixel des Bildes in reine Schwarz- oder Weißwerte umwandelt. Anschließend werden im resultierenden Bild Konturen, also geradlinige Grenzen zwischen schwarzen und weißen Pixeln, gesucht und diese wiederum entsprechend der visuellen Eigenschaften der drei Platzierungsquadrate eines QR-Codes gefiltert. Dabei existiert eine geschlossene schwarze Kontur 502 innerhalb einer geschlossenen weißen Kontur 504 innerhalb wiederum einer geschlossenen schwarzen Kontur 506.

Wurden die drei Platzierungsquadrate 502, 504, 506 des QR-Codes gefunden, werden die Pixel zwischen diesen ausgelesen und entsprechend der Verteilung von schwarzen und weißen Pixeln mit zuvor bestimmter Codierung eine Bitfolge bestimmt, die wiederum in eine Zeichenkette oder URL umgewandelt wird.

Im nächsten Schritt wird die Position und Lage des QR-Codes relativ zur Kamera bestimmt. Dazu wird z.B. beispielsweise das in der Literatur bekannte Perspective-n-Point-Verfahren "RANSAC" genutzt. Im Wesentlichen wird dazu die Kamera unter Voraussetzung entsprechender Kalibrierung mit einem einfachen Lochkameramodell approximiert, so dass die Abbildung von 3D-Punkten in der realen Umgebung der Kamera zu deren korrespondierenden Punkten im 2D-Kamerbild durch ein lineares Gleichungssystem beschrieben werden kann. Dieses Gleichungssystem wird mit den Punkten der 3 QR-Code-Platzierungsquadrate im Kamerabild gefüllt und mit den bekannten Nebenbedingungen der Lage der Quadrate zueinander erweitert, um so durch lineare Optimierung gelöst werden zu können.

Im Folgenden werden teilweise anhand von Fig. 1 eingesetzte Bezugszeichen zur weiteren Beschreibung des Verfahrens verwendet:
Gleichzeitig wird beispielsweise genau in dem Moment der Erkennung des Markers 112, beispielsweise in Form eines Codes, die aktuelle Umgebung unmittelbar um den Marker 112 herum im Kamerabild 108 erfasst, natürliche Merkmale 114 daraus extrahiert und damit in Echtzeit ein neuer natürlicher Marker 118 entsprechend dem zweiten Verfahren erstellt. Dazu wird beispielsweise das aus der Literatur bekannte "SURF" (Speeded Up Robust Features)-Verfahren genutzt, welches Merkmale in zweidimensionalen Objekten transformationsinvariant abspeichert und in nachfolgenden Bildern wiedererkennen kann. Die Gesamtheit der zum Zeitpunkt der Erstellung durch SURF identifizierten Merkmale sowie deren Positionierung zueinander werden als zusammengehöriger "Marker" abgespeichert. Zusätzlich wird aus die zuvor berechnete Position des QR-Codes innerhalb dieses Bildes in Relation zu diesem neu erstellten Marker abgespeichert.

In allen folgenden Kamerabildern 120 und Bewegungen von Kamera 102 oder Marker 114 kann die dreidimensionale Positionsbestimmung des AR-Inhalts 124 nun anhand des neuen, robusten natürlichen Markers 114 erfolgen.

Dazu wird in jedem folgenden Kamerabild erneut der SURF-Algorithmus angewendet und die darin gefundenen Merkmale mit den zuvor abgespeicherten Merkmalen verglichen. Bei ausreichender Übereinstimmung gilt der zuvor abgespeicherte, mit dem anfänglichen QR-Code verknüpfte, Marker im Folgebild als erkannt. Weiterhin kann seine Position erneut anhand eines Perspective-n-Point-Verfahrens (siehe oben) bestimmt werden.

Zur Darstellung der Augmented Reality werden die so ermittelten Daten zu Position und Lage des QR-Codes gemäß einem Ausführungsbeispiel genutzt, um die Darstellung von virtuellen Objekten, welche beispielsweise als 3D-CAD-Modell vorliegen, entsprechend zu transformieren und anschließend eine 2D-Repräsentation dieser Objekte mit Hilfe einer virtuellen Kamera zu berechnen. Im letzten Schritt wird die transformierte 2D-Ansicht des virtuellen Objektes auf das reale Kamerabild überlagert und so im zusammengesetzten Bild der Eindruck erzeugt, das virtuelle Objekt befände sich im Kamerabild der realen Umgebung unmittelbar auf dem QR-Code.

Bei fortschreitender Entfernung oder Verdrehung der Kamera zum ursprünglich identifizierten QR-Code kann obiges Positionierungs-Verfahren beliebig oft wiederholt werden, um so fortwährend neue "Marker" in der realen Umgebung zu erstellen und zusammen mit dessen relativer Position zum QR-Code abzuspeichern. Diese kontinuierliche Iteration ist in der Literatur als "SLAM" (Simultaneous Location and Mapping) bekannt. Je nach zu erwartender Szene (z.B. vorwiegend Flächen oder unebene Strukturen, glänzende oder raue Materialien, ruhende oder bewegte Bilder) können neben der genannten SURF-Methode auch einige andere Merkmals-Deskriptoren verwendet werden um Merkmale eindeutig und störungsinvariant wiederzuerkennen.

So ist auch eine durchgängig stabile Darstellung und Bewegung und akustisch korrekte Darstellung von dreidimensionalen virtuellen Objekten als virtuelle Bilder 124 möglich, bzw. im Gegensatz zu geometrischen Markern können diese auch noch verfolgt werden, wenn sie nur klein und dezent in der realen Szene 106 platziert werden.

Weiterhin ist die optische Unterscheidungsfähigkeit des neu erstellten Markers 114 im Vergleich zu anderen Markern völlig unerheblich, da dessen Zuordnung zu einem AR-Inhalt 124 bereits durch den verknüpften Code, also dem Marker 112, festgelegt wurde. Durch das direkte Extrahieren einer URL aus dem verknüpften Code wird außerdem das stetige Durchsuchen einer Online-Merkmals-Datenbank vermieden und die Anzahl der unterscheidbaren Marker innerhalb einer Anwendung auf nahezu unendlich erhöht. Weiterhin sind durch die Erstellung des natürlichen AR-Markers 114 unmittelbar zum Zeitpunkt der Verwendung im Gegensatz zu bisherigen AR-Verfahren auch solche Objekte 100 als natürliche Marker 114 verwendbar, die ihr optisches Erscheinungsbild häufig ändern, z.B. Häuserfassaden zu verschiedenen Tageszeiten oder Jahreszeiten.

Eine Erweiterung stellt die Augmented Reality-Einblendung von Objekten dar, zu denen keine 3D-CAD-Daten, sondern lediglich Fotos aus verschiedenen Blickwinkeln existieren.

Die Problemstellung ist hier insbesondere, dass ohne die 3D-CAD-Daten keine Transformation des virtuellen Objekts durchgeführt werden kann und mit herkömmlichen Verfahren kein virtuelles 2D-Abbild davon berechnet werden kann, das den Eindruck der lagerichtigen Positionierung des virtuellen Objekts in der realen Umgebung erweckt. Als Lösung des Problems wird hier ein Verfahren vorgestellt, welches diesen Eindruck auch allein auf Basis von zuvor aufgenommenen Fotos eines Objektes mit zum Zeitpunkt der Aufnahme bekanntem Betrachtungswinkel der Aufnahme-Kamera zum Objekt realisiert. Dazu werden die wie oben beschrieben ermittelte Position und Lage des QR-Codes relativ zur Kamera genutzt: Zunächst wird aus den vorhandenen Bildern des Objekts genau jenes ausgewählt, dessen Betrachtungswinkel zum Zeitpunkt der Aufnahme am besten dem Betrachtungswinkel der Augmented-Reality-Kamera relativ zum QR-Code entspricht. Optional wird aus mehreren Bildern ein neues Bild interpoliert, welches dem Betrachtungswinkel noch besser entspricht. Dieses Bild wird nun entsprechend des Abstandes des QR-Codes zur Augmented-Reality-Kamera skaliert und entsprechend der Position des QR-Codes im Kamerabild positioniert, so dass die Komposition beider Bilder fortlaufend den Eindruck erweckt, dass zuvor fotografierte Objekte stände in der nachträglich mit der Augmented-Reality-Kamera betrachteten Umgebung.

## Patentansprüche

1. Verfahren zum Überlagern eines optischen und akustischen Abbilds einer realen Szenerie mit virtuellen dreidimensionalen oder zweidimensionalen Bild- und Audiodaten, wobei das Verfahren die folgenden Schritte umfasst:
Erfassen (482) von Abbilddaten unter Verwendung einer Umfelderfassungseinrichtung (102) und einer weiteren Umfelderfassungseinrichtung (103) eines mobilen Geräts (100), wobei die Abbilddaten Bilddaten (364) umfassen, die ein von der Umfelderfassungseinrichtung (102) des mobilen Geräts (100) erfasstes bildliches Abbild (108) der realen Szenerie (106) repräsentieren, und wobei die Abbilddaten Audiodaten (365) umfassen, die ein von der einer weiteren Umfelderfassungseinrichtung (103) des mobilen Geräts (100) erfasstes akustisches Abbild der realen Szenerie (106) repräsentieren;
Einlesen (480) der Abbilddaten;
Bestimmen (484) von Markerdaten (132) aus den Bilddaten (364), wobei die Markerdaten (132) ein Abbild (116) und eine Positionierung eines in der realen Szenerie (106) angeordneten Markers (112) repräsentieren; und
Einlesen (488) von virtuellen Bild- und Audiodaten (140), die aus einer Mehrzahl (252) virtueller Bild- und Audiodaten (140) unter Verwendung der Markerdaten (132) nur dann ausgewählt werden, wenn als der Marker (112) ein neuer künstlicher Marker gefunden wurde, wobei die virtuellen Bild- und Audiodaten (140) eine Darstellungsanweisung zum Darstellen eines dreidimensional definierten Objektes und/oder einer Auswahl von aus verschiedenen Winkeln aufgenommenen Aufnahmen eines Objekts als virtuelles Abbild (124), eine Positionierungsanweisung zum Positionieren des virtuellen Abbilds (124) sowie eine Positionierungsanweisung zur Wiedergabe von akustischen Daten umfasst;
Bestimmen (486) von Objektdaten (134) aus den Abbilddaten, wobei die Objektdaten (134) aus einem dreidimensionalen Abbild (118) oder einer Reihe von zweidimensionalen Fotografien und/oder Tonaufnahmen aus verschiedenen Winkeln und einer Positionierung eines Objektabschnitts (114) eines im Umfeld des Markers (112) in der realen Szenerie (106) angeordneten Objekts (110) bestehen;
Ermitteln (492) einer Positionierungsvorschrift (142) zum Positionieren des virtuellen Abbilds (124) und der akustischen Daten in Bezug zu dem Abbild (118) des Objektabschnitts (114) unter Verwendung der Objektdaten (134) und der virtuellen Bild-und Audiodaten (140); wobei
im Schritt des Ermittelns (492) die Positionierungsvorschrift (142) unter Verwendung der Positionierung des Abbilds (116) des Markers (112), der Positionierung des Abbilds des Objektabschnitts (114) und der Positionierungsanweisung ermittelt wird, wobei das Abbild (118) des Objektabschnitts (114) als neuer natürlicher Marker zum Positionieren des virtuellen Abbilds (124) und der akustischen Daten in von der Umfelderfassungseinrichtung (102) erfassten weiteren Abbildern (120) der realen Szenerie (106) abgespeichert und zusätzlich oder alternativ zu dem Marker (112) verwendet wird; und
eine kontinuierliche Iteration der Schritte des Einlesens (480, 488), des Bestimmens (484, 486) und des Ermittelns (492) mehrmals pro Sekunde durchgeführt wird, um fortwährend neue natürliche Marker zu erstellen, wobei der Schritt des Bestimmens (484) ausgeführt wird, um den zuvor abgespeicherten neuen natürlichen Marker zu erkennen;
Verwenden (494) der Positionierungsvorschrift (142), um ein weiteres optisches und akustisches Abbild (120) der realen Szenerie (106) mit den virtuellen Bild- und Audiodaten (124) zu überlagern, wobei eine Überlagerung des weiteren optischen und akustischen Abbilds (120) der realen Szenerie (106) mit den virtuellen Bild- und Audiodaten (124) das weitere optische und akustische Abbild (120) der realen Szenerie umfasst, in dem zumindest ein Bereich vollständig oder halb-transparent von den virtuellen Bild- und Audiodaten (124) verdeckt ist;
Anzeigen (498) der Überlagerung des weiteren Abbilds (120) der realen Szenerie (106) mit den virtuellen Bild- und Audiodaten (124) unter Verwendung einer Anzeige- und einer Wiedergabeeinrichtung (104 und 105) des mobilen Geräts (100).

2. Verfahren gemäß Anspruch 1, bei dem die Bilddaten (364) und/oder die Audiodaten (365) reale Bild- und Audiodaten, die Objektdaten (134) reale Objektdaten und der Objektabschnitt (114) einen realen Objektabschnitt repräsentieren.

3. Verfahren gemäß einem der vorangegangenen Ansprüche, bei dem im Schritt (492) des Ermittelns die Positionierungsvorschrift (142) unter Verwendung der Markerdaten (132) oder zumindest eines Teils der Markerdaten (132) ermittelt wird.

4. Verfahren gemäß einem der vorangegangenen Ansprüche, bei dem im Schritt (492) des Ermittelns die Positionierungsvorschrift (142) unter Verwendung eines Messwertes eines Messgerätes, insbesondere eines Beschleunigungssensors, eines Rotationssensors, eines Magnetometers oder eines GPS-Empfängers, des mobilen Geräts ermittelt wird.

5. Verfahren gemäß einem der vorangegangenen Ansprüche, mit einem Schritt des Bereitstellens zumindest eines Teils der Markerdaten (132) an eine Schnittstelle (360) zu einer externen Einrichtung (130), wobei im Schritt des Einlesens (488) von virtuellen Bild- und Audiodaten (140) die virtuellen Bild- und Audiodaten (140) über die Schnittstelle (360) zu der externen Einrichtung (130) eingelesen werden.

6. Verfahren gemäß einem der vorangegangenen Ansprüche, bei dem der Marker (112) einen maschinenlesbaren Code repräsentiert, der eine Identifikation (138) des Markers (112) umfasst, wobei im Schritt des Bestimmens (484) von Markerdaten (132) die Identifikation (138) des Markers (112) als Teil der Markerdaten (132) bestimmt wird.

7. Verfahren gemäß einem der vorangegangenen Ansprüche, bei dem der Schritt (494) des Verwendens einen Schritt des Einlesens (495) von weiteren Bild- und Audiodaten (376) umfasst, wobei die weiteren Bild- und Audiodaten (376) das von den Umfelderfassungseinrichtungen (102) des mobilen Geräts (100) erfasste weitere Abbild (120) der realen Szenerie (106) repräsentieren, einen Schritt (496) des Bestimmens einer Positionierung eines weiteren Abbilds (122) des Objektabschnitts (114) aus den weiteren Bild- und Audiodaten (376) umfasst, und einen Schritt des Erstellens (497) überlagerter Bild- und Audiodaten (374) unter Verwendung der weiteren Bild- und Audiodaten (376), der Positionierung des weiteren Abbilds (122) des Objektabschnitts (114) und der Positionierungsvorschrift (142) umfasst, wobei die überlagerten Bild- und Audiodaten (374) eine Überlagerung des weiteren Abbilds (120) der realen Szenerie (106) mit den virtuellen Bild- und Audiodaten (124) repräsentieren.

8. Verfahren gemäß einem der vorangegangenen Ansprüche, bei der das Abbild (116) des Markers (112) weniger als 1% des Abbilds (108) der realen Szenerie (106) einnimmt.

9. Vorrichtung (379) zum Überlagern eines Abbilds einer realen Szenerie (106) mit virtuellen Bild- und Audiodaten, wobei die Vorrichtung (379) Einrichtungen zum Umsetzen der Schritte des Verfahrens gemäß einem der vorangegangenen Ansprüche aufweist.

10. Mobiles Gerät (100), insbesondere Smartphone, mit einer Vorrichtung (379) gemäß Anspruch 9.

11. Computer-Programmprodukt mit Programmcode zur Durchführung des Verfahrens nach einem der vorangegangenen Ansprüche 1 bis 8, wenn das Computer-Programmprodukt auf einer Vorrichtung ausgeführt wird.

## Claims

1. Method of overlaying an optical and acoustic reproduction of a real scene with virtual three-dimensional or two-dimensional image and audio data, the method comprising the following steps:
capturing (482) reproduction data using an environment sensor (102) and a further environment sensor (103) of a mobile device (100), wherein the reproduction data represent image data (364) which represent an image reproduction (108) of the real scene (106) captured by the environment sensor (102) of the mobile device (100), and wherein the reproduction data represent audio data (365) which represent an acoustic reproduction of the real scene (106) captured by the further environment sensor (103) of the mobile device (100);
reading (480) the reproduction data;
determining (484) marker data (132) from the image data (364), wherein the marker data (132) represent a reproduction (116) and a positioning of a marker (112) arranged in the real scene (106);
reading (488) virtual image and audio data (140) which represent image and audio data selected from a plurality (252) of virtual image and audio data (140) using the marker data (132), only when a new artificial marker has been found as the marker (112), wherein the virtual image and audio data (140) comprise a representation instruction for representing a three-dimensional the defined object and/or a selection of captures of an object captured from various angles as a virtual reproduction (124), a positioning instruction for positioning the virtual reproduction (124) and a positioning instruction for replay of acoustic data;
determining (486) object data (134) from the reproduction data (364), wherein the object data (134) consist of a three-dimensional reproduction (118) or a series of two-dimensional photographs and/or audio recordings from various angles and a positioning of object portion (114) of an object (110) arranged in the environment of the marker (112) in the real scene (106);
ascertaining (492) a positioning rule (142) for representing the virtual reproduction (124) and the acoustic data with reference to the reproduction (118) of the object portion (114) using the object data (134) and the virtual image and audio data (140); wherein
in the step of ascertaining (492), the positioning rule (142) is ascertained using the positioning of the reproduction (116) of the marker (112), the positioning of the reproduction of the object portion (114), and the positioning instruction, wherein the reproduction (118) of the object portion (114) is stored as a new natural marker for positioning the virtual reproduction (124) and the acoustic data in further reproductions (120) of the real scene (106) captured by the environment sensor (102) and is used in addition to or as an alternative to the marker (112); and
a continuous iteration of the steps of reading (480, 488), of determining (484, 486) and of ascertaining (492) is performed several times per second in order to continuously create new natural markers, wherein the step of determining (484) is performed in order to recognize the previously stored new natural marker;
using (494) the positioning rule (142) in order to overlay a further optical and acoustic reproduction (120) of the real scene (106) with the virtual image and audio data (124), wherein an overlay of the further optical and acoustic reproduction (120) of the real scene (106) with the virtual image and audio data (124) includes the further optical and acoustic reproduction (120) of the real scene, in which at least a portion is masked completely or in a semitransparent manner by the virtual image and audio data (124);
displaying (498) the overlay of the further reproduction (120) of the real scene (106) with the virtual image and audio data (124) using a display device and a replay device (104 and 105) of the mobile device (100).

2. Method according to claim 1, wherein the image data (364) and/or the audio data (365) represent real image and audio data, the object data (134) represent real object data, and the object portion (114) represents a real object portion.

3. Method according to one of the preceding claims, wherein in the step (492) of ascertaining the positioning rule (142) is ascertained using the marker data (132) or at least part of the marker data (132).

4. Method according to one of the preceding claims, wherein in the step (492) of ascertaining the positioning rule (142) is ascertained using a measured value of a measuring device, in particular an acceleration sensor, a rotation sensor, a magnetometer or a GPS receiver, of the mobile device.

5. Method according to one of the preceding claims, comprising a step of providing at least part of the marker data (132) to an interface (360) to an external device (130), wherein in the step of reading (488) virtual image and audio data (140) the virtual image and audio data (140) are read via the interface (360) to the external device (130).

6. Method according to one of the preceding claims, wherein the marker (112) represents machine-readable code comprising an identification (138) of the marker (112), wherein the step of determining (484) marker data (132) the identification (138) of the marker (112) is determined as part of the marker data (132).

7. Method according to one of the preceding claims, wherein the step (494) of using comprises a step of reading (495) further image and audio data (376), wherein the further image and audio data (376) represent the further image (120) of the real scene (106) captured by the environment sensors (102) of the mobile device (100), a step (496) of determining a positioning of a further reproduction (122) of the object portion (114) from the further image and audio data (376), and a step of creating (497) overlaid image and audio data (374) using the further image and audio data (376), the positioning of the further reproduction (122) of the object portion (114) and the positioning rule (142), wherein the overlaid image and audio data (374) represent an overlay of the further reproduction (120) of the real scene (106) with the virtual image and audio data (124).

8. Method according to one of the preceding claims, wherein the reproduction (116) of the marker (112) takes up less than 1% of the reproduction (108) of the real scene (106).

9. Apparatus (379) for overlaying a reproduction of a real scene (106) with virtual image and audio data, wherein the apparatus (379) comprises devices for implementing the steps of the method according to one of the preceding claims.

10. Mobile device (100), in particular smartphone, comprising an apparatus (379) according to claim 9.

11. Computer program product with program code for performing the method according to one of the preceding claims 1 to 8, when the computer program product is executed on an apparatus.

## Revendications

1. Procédé pour superposer une reproduction optique et acoustique d'une scène réelle avec des données d'image et audio virtuelles en trois dimensions ou en deux dimensions, le procédé comprenant les étapes suivantes :
capturer (482) des données de reproduction à l'aide d'un capteur d'environnement (102) et d'un autre capteur d'environnement (103) d'un dispositif mobile (100), les données de reproduction représentant des données d'image (364) qui représentent une reproduction d'image (108) de la scène réelle (106) capturée par le capteur d'environnement (102) du dispositif mobile (100), et dans lequel les données de reproduction représentent des données audio (365) qui représentent une reproduction acoustique de la scène réelle (106) capturée par l'autre capteur d'environnement (103) du dispositif mobile (100) ;
lire (480) les données de reproduction ;
déterminer (484) des données de marqueur (132) à partir des données d'image (364), dans lequel les données de marqueur (132) représentent une reproduction (116) et un positionnement d'un marqueur (112) disposé dans la scène réelle (106) ;
lire (488) des données d'image et audio virtuelles (140) qui représentent des données d'image et audio sélectionnées parmi une pluralité (252) de données d'image et audio virtuelles (140) à l'aide des données de marqueur (132), uniquement lorsqu'un nouveau marqueur artificiel a été trouvé en tant que marqueur (112), dans lequel les données d'image et audio virtuelles (140) comprennent une instruction de représentation pour représenter un objet défini en trois dimensions et/ou une sélection de captures d'un objet capturé sous différents angles en tant que reproduction virtuelle (124), une instruction de positionnement pour positionner la reproduction virtuelle (124) et une instruction de positionnement pour la lecture de données acoustiques ;
déterminer (486) les données d'objet (134) à partir des données de reproduction (364), dans lequel les données d'objet (134) consistent en une reproduction tridimensionnelle (118) ou une série de photographies bidimensionnelles et/ou d'enregistrements audio sous différents angles et un positionnement de la partie d'objet (114) d'un objet (110) disposé dans l'environnement du marqueur (112) dans la scène réelle (106) ;
déterminer (492) une règle de positionnement (142) pour représenter la reproduction virtuelle (124) et les données acoustiques en référence à la reproduction (118) de la partie d'objet (114) à l'aide des données d'objet (134) et des données d'image et audio virtuelles (140) ; dans lequel
dans l'étape de détermination (492), la règle de positionnement (142) est déterminée en utilisant le positionnement de la reproduction (116) du marqueur (112), le positionnement de la reproduction de la partie d'objet (114), et l'instruction de positionnement, dans laquelle la reproduction (118) de la partie objet (114) est stockée en tant que nouveau marqueur naturel pour positionner la reproduction virtuelle (124) et les données acoustiques dans d'autres reproductions (120) de la scène réelle (106) capturée par le capteur d'environnement (102) et est utilisée en plus ou à la place du marqueur (112) ; et
une itération continue des étapes de lecture (480, 488), de détermination (484, 486) et de vérification (492) est effectuée plusieurs fois par seconde afin de créer en continu de nouveaux marqueurs naturels, l'étape de détermination (484) étant effectuée afin de reconnaître le nouveau marqueur naturel précédemment stocké ;
utilisation (494) de la règle de positionnement (142) afin de superposer une reproduction optique et acoustique supplémentaire (120) de la scène réelle (106) avec l'image virtuelle et les données audio (124), dans laquelle une superposition de la reproduction optique et acoustique supplémentaire (120) de la scène réelle (106) avec l'image virtuelle et les données audio (124) comprend la reproduction optique et acoustique supplémentaire (120) de la scène réelle, dans laquelle au moins une partie est masquée complètement ou de manière semi-transparente par l'image virtuelle et les données audio (124) ;
afficher (498) de la superposition de la reproduction supplémentaire (120) de la scène réelle (106) avec l'image virtuelle et les données audio (124) à l'aide d'un dispositif d'affichage et d'un dispositif de lecture (104 et 105) du dispositif mobile (100).

2. Procédé selon la revendication 1, dans lequel les données d'image (364) et/ou les données audio (365) représentent des données d'image et audio réelles, les données d'objet (134) représentent des données d'objet réelles, et la partie d'objet (114) représente une partie d'objet réelle.

3. Procédé selon l'une des revendications précédentes, dans lequel, à l'étape (492) de détermination de la règle de positionnement (142), celle-ci est déterminée à l'aide des données de marqueur (132) ou d'au moins une partie des données de marqueur (132).

4. Procédé selon l'une des revendications précédentes, dans lequel, à l'étape (492) de détermination de la règle de positionnement (142), celle-ci est déterminée à l'aide d'une valeur mesurée par un dispositif de mesure, en particulier un capteur d'accélération, un capteur de rotation, un magnétomètre ou un récepteur GPS, du dispositif mobile.

5. Procédé selon l'une des revendications précédentes, comprenant une étape consistant à fournir au moins une partie des données de repère (132) à une interface (360) vers un dispositif externe (130), dans lequel, dans l'étape de lecture (488) des données d'image et audio virtuelles (140), les données d'image et audio virtuelles (140) sont lues via l'interface (360) vers le dispositif externe (130).

6. Procédé selon l'une des revendications précédentes, dans lequel le marqueur (112) représente un code lisible par machine comprenant une identification (138) du marqueur (112), dans lequel l'étape consistant à déterminer (484) les données de marqueur (132) l'identification (138) du marqueur (112) est déterminée comme faisant partie des données de marqueur (132).

7. Procédé selon l'une des revendications précédentes, dans lequel l'étape (494) d'utilisation comprend une étape de lecture (495) d'autres données d'image et audio (376), dans laquelle les autres données d'image et audio (376) représentent l'autre image (120) de la scène réelle (106) capturée par les capteurs d'environnement (102) du dispositif mobile (100), une étape (496) consistant à déterminer un positionnement d'une autre reproduction (122) de la partie d'objet (114) à partir des autres données d'image et audio (376), et une étape consistant à créer (497) des données d'image et audio superposées (374) en utilisant les autres données d'image et audio (376), le positionnement de la reproduction supplémentaire (122) de la partie objet (114) et la règle de positionnement (142), dans lequel les données d'image et audio superposées (374) représentent une superposition de la reproduction supplémentaire (120) de la scène réelle (106) avec les données d'image et audio virtuelles (124).

8. Procédé selon l'une des revendications précédentes, dans lequel la reproduction (116) du marqueur (112) occupe moins de 1 % de la reproduction (108) de la scène réelle (106).

9. Appareil (379) pour superposer une reproduction d'une scène réelle (106) avec des données d'image et audio virtuelles, dans lequel l'appareil (379) comprend des moyens de mise en œuvre des étapes du procédé selon l'une des revendications précédentes.

10. Dispositif mobile (100), en particulier smartphone, comprenant un appareil (379) selon la revendication 9.

11. Produit programme d'ordinateur avec code de programme pour exécuter le procédé selon l'une des revendications 1 à 8 précédentes, lorsque le produit programme d'ordinateur est exécuté sur un appareil.
